# EUROPÄISCHE PATENTSCHRIFT

(11) **EP 4 349 646 B1**
(45) Veröffentlichungstag und Bekanntmachung des Hinweises auf die Patenterteilung: **04.03.2026**
(21) Anmeldenummer: 23192488.7
(22) Anmeldetag: 21.08.2023
(51) Int. Cl.: B60N 2/66, B60N 2/70, B60N 2/72

(54) **FAHRZEUGSITZ MIT RÜCKENLEHNE AUS RAHMENELEMENT UND GESTRICK**
VEHICLE SEAT WITH BACKREST MADE OF FRAME ELEMENT AND KNITTED FABRIC
SIÈGE DE VÉHICULE AVEC DOSSIER CONSTITUÉ D'UN ÉLÉMENT DE CADRE ET D'UN TRICOT

(30) Priorität: 06.10.2022 DE 102022125858
(43) Veröffentlichungstag der Anmeldung: 10.04.2024
(73) Patentinhaber: GRAMMER AG, 92289 Ursensollen (DE)
(72) Erfinder: Wegmann, Sebastian, 93059 Regensburg (DE); Neidl, Christopher, 92546 Schmidgaden (DE); Pöllinger, Thomas, 93059 Regensburg (DE)
(74) Vertreter: Hannke Bittner & Partner mbB Regensburg

(56) Entgegenhaltungen:
- EP-A1- 0 063 193
- DE-A1- 4 303 006
- US-A- 5 013 089

## Beschreibung

Die Erfindung betrifft einen Fahrzeugsitz mit einem Sitzteil und einem Rückenlehnenteil, bei welchem das Rückenlehnenteil ein Rahmenelement, das eine Innenfläche einschließt, und ein an dem Rahmenelement angeordnetes Gestrick aufweist. Ferner betrifft die Erfindung eine Inneneinrichtung eines Transportmittels, insbesondere ein Personentransportmittel, mit einem Fahrzeugsitz sowie ein Verfahren zur Herstellung einer Rückenlehne für einen Fahrzeugsitz.

Derartige Fahrzeugsitze werden beispielsweise in Personentransportmitteln, wie Zügen verwendet. Solche Transportmittel sind dafür vorgesehen und dafür geeignet, eine Mehrzahl an Personen transportieren zu können und sind beispielsweise Schienenfahrzeuge oder Flugzeuge. Entsprechende Schienenfahrzeuge sind beispielsweise Nah- und/oder Fernverkehrszüge, S-Bahnen, U-Bahnen und Ähnliches. Der zur Verfügung stehende Raum für und um den Sitz ist gerade in solchen Transportmitteln oftmals begrenzt. Es besteht daher das Bedürfnis, den zur Verfügung stehenden Raum möglichst optimal auszunutzen. Dabei sollten möglichst viele reisende Personen in einem Transportmittel aufgenommen werden können. Des Weiteren spielen das Gewicht und die Kosten der Fahrzeugsitze, allein aufgrund der großen Anzahl in solchen Transportmitteln, eine entscheidende Rolle, wobei insbesondere diese Punkte bei bisherigen Fahrzeugsitzen von Nachteil sind. Auch eine einfache und schnelle Austauschbarkeit von Verschleißteilen, wie Bezügen, ist besonders relevant, da durch die intensive Nutzung durch eine Vielzahl von Passagieren, aber auch durch Vandalismus mit einem Austausch der Bezüge in regelmäßigen Abständen gerechnet werden muss, wobei sich dies bei bekannten Fahrzeugsitzen meist als zeit- und kostenintensiv darstellt.

Das Dokument US 5 013 089 A offenbart zum Beispiel einen Fahrzeugsitz aus dem Stand der Technik.

Aufgabe der vorliegenden Erfindung ist es einen Fahrzeugsitz bereitzustellen, welcher die eingangs genannten Nachteile überwindet. Ferner ist es die Aufgabe der Erfindung eine Inneneinrichtung eines Transportmittels bereitzustellen, welche die eingangs genannten Nachteile überwindet. Des Weiteren ist es die Aufgabe der Erfindung ein Verfahren zur Herstellung eines Rückenlehnenteils für einen Fahrzeugsitz bereitzustellen, welches die eingangs genannten Nachteile überwindet

Die Aufgabe wird durch die Gegenstände der Ansprüche 1 und 8 sowie das Verfahren des Anspruchs 9 gelöst. Vorteilhafte Ausgestaltungen sind den Unteransprüchen zu entnehmen.

Kerngedanke der Erfindung ist ein Fahrzeugsitz mit einem Sitzteil und einem Rückenlehnenteil, bei welchem das Rückenlehnenteil ein Rahmenelement, das eine Innenfläche einschließt, und ein an dem Rahmenelement angeordnetes Gestrick aufweist, wobei das Rahmenelement zumindest an zwei gegenüberliegenden Innenseiten jeweils mindestens ein Befestigungselement aufweist und das Gestrick jeweils ein komplementär dazu ausgebildetes und rückseitig angeordnetes Befestigungselement aufweist, wobei das Gestrick durch die Befestigungselemente derart an dem Rahmenelement befestigt ist, dass das Gestrick das Rahmenelement ausgehend von einer dem Sitzteil zugewandten Vorderseite des Rahmenelements zumindest teilweise von außen nach innen umgreift und im Wesentlichen vollständig gespannt ist.

Der hierin verwendete Ausdruck "im Wesentlichen" soll dahingehend auszulegen sein, dass auch geringfügige Toleranzabweichungen hinsichtlich eines Merkmals mit beansprucht werden. Das Rahmenelement schließt eine Innenfläche ein. Unter einer Innenfläche wird erfindungsgemäß eine materialfreie bzw. leere Fläche verstanden, die von dem umschließenden Rahmenelement umfänglich begrenzt wird.

Erfindungsgemäß stellt das Gestrick einen Sitzbezug der Rückenlehne dar, insbesondere einen gestrickten Sitzbezug. Ein solches Gestrick ist vorteilhafterweise mit einer Strickmaschine hergestellt. Diese vorteilhafte Verwendung eines Gestricks erlaubt eine hohe Variabilität bei der Ausgestaltung der Bereiche mit unterschiedlichen Elastizitäten. Derartige Gestricke können vorteilhafterweise sowohl flexible als auch starre, beziehungsweise feste Abschnitte aufweisen. Im Vergleich zu herkömmlichen Webstoffen können Gestricke sehr einfach, kostengünstig und anwendungsspezifisch hergestellt werden.

Ein Gestrick kann durch bestimmte Garne hergestellt werden, wobei bevorzugt das Garn zumindest eine der folgenden Eigenschaften Höchstzugkraft höchstens 60 N, Dehnung höchstens 20% und Material Polyester oder zumindest teilweise aus Polyester gefertigt aufweist.

Ebenso ist es denkbar, dass verschiedene verwendete Gestricke vorliegen, welche unterschiedliche Muster aufweisen können.

Unter einer komplementären Ausbildung der Befestigungselemente des Rahmenelements und des Gestricks wird eine solche Ausbildung verstanden, dass durch die Befestigungselemente eine dauerhafte, insbesondere lösbare formschlüssige, Verbindung zwischen dem Rahmenelement und dem Gestrick möglich ist. Des Weiteren wird durch die komplementäre Ausbildung neben der Verbindbarkeit ebenfalls die räumliche Anordnung der Befestigungselemente am Rahmenelement und am Gestrick verstanden, wonach diese eine entsprechende Verbindung der Befestigungselemente bei dem vorgesehenen Sitz des Gestricks auf dem Rahmenelement ermöglicht. Die Anzahl der Befestigungselemente am Rahmenelement und am Gestrick ist demnach bevorzugt identisch, wobei zu jedem Befestigungselement am Rahmenelement ein nach Form und räumlicher Anordnung komplementäres Befestigungselement oder umgekehrt vorhanden ist.

Durch die erfindungsgemäße Ausbildung der Rückenlehne des Fahrzeugsitzes mit Rahmenelement und Gestrick ist gewährleistet, dass keine weiteren Elemente zur Stützung und/oder Polsterung, zumindest im Bereich der Innenfläche, nötig ist. So können Kosten, Platz und Gewicht im Vergleich zu üblichen Fahrzeugsitzen eingespart werden.

Bevorzugt handelt es sich bei dem hier beschriebenen Fahrzeugsitz um einen Bahnsitz, d.h. einen Sitz für Schienenfahrzeuge, wie Nah- und/oder Fernverkehrszüge, S-Bahnen, U-Bahnen und Ähnliches.

Gemäß einer bevorzugten Ausführungsform ist das Gestrick zumindest im Bereich der Innenfläche freischwingend auf der Vorderseite des Rahmenelements angeordnet. Bevorzugt ist das Gestrick im Bereich der Innenfläche auf oder über der Innenfläche oder abschnittsweise auf oder über und innerhalb der Innenfläche angeordnet. Dies ist bevorzugt auch durch die Ausbildung eines innerhalb des Gestricks angeordneten Polsterstützelements bedingt und bietet optische und ergonomische Vorteile. Bevorzugt stellt das Gestrick zumindest in dem Bereich der Innenfläche die einzige Stützung und/oder Polsterung für einen Sitzbenutzer bereit. Durch die freischwingende Anordnung im Bereich der Innenfläche ist das Gestrick bei einer Belastung durch einen Sitzbenutzer nach hinten in die Innenfläche hinein oder darüber hinaus dehnbar, sodass die Polsterung bzw. Stützung gewährleistet werden kann. Vorteilhafterweise ist der Sitzbezug dazu vorgesehen und bestimmt der durch den Sitzbenutzer eingebrachten Kraft standzuhalten. Das Gestrick weist demnach vorteilhafterweise eine entsprechende Stabilität auf. Demnach sind vorteilhafterweise keine weiteren abstützenden oder polsternden Elemente in der Innenfläche angeordnet. Das Gestrick kann im Bereich der Innenfläche entweder vollständig auf oder über der Innenfläche angeordnet sein. Dies ist insbesondere dann der Fall, falls kein Polterstützelement in dem Gestrick vorgesehen ist. Das Gestrick kann auch im Bereich der Innenfläche abschnittsweise auf oder über und innerhalb der Innenfläche angeordnet, wobei dies dann der Fall ist, falls ein Polsterstützelement vorgesehen ist.

Gemäß einer bevorzugten Ausführungsform umfasst das Rahmenelement einen durchgehenden oberen Bereich zur Abstützung des Kopfes und einen die Innenfläche aufweisenden unteren Bereich zur Abstützung des Rückens. Im Gegensatz zur Innenfläche ist also der obere Bereich durchgehend, d.h. nicht-materialfrei ausgebildet, wobei in diesem oberen Bereich auch ein Schaumstoffelement zur zusätzlichen Polsterung des Kopfes vorgesehen sein kann. Bevorzugt begrenzen eine Innenseite des oberen Bereichs die Innenfläche von oben und drei Innenseiten des unteren Bereichs die Innenfläche seitlich und von unten. Weiter bevorzugt weist das Rahmenelement an allen die Innenfläche begrenzenden Innenseiten jeweils mindestens ein Befestigungselement auf. Durch diese Anordnung der Befestigungselemente ist das Gestrick vorteilhaft auf Spannung an dem Rahmenelement angeordnet. Bevorzugt sind die Befestigungselemente am Rahmenelement und dem Gestrick derart ausgebildet, dass die Befestigung des Gestricks am Rahmenelement zerstörungsfrei lösbar ist. Besonders bevorzugt handelt es sich bei der Befestigung zwischen dem Rahmenelement und dem Gestrick um eine lösbare formschlüssige Verbindung.

Gemäß einer bevorzugten Ausführungsform sind die Befestigungselemente am Rahmenelement als Haken, Leisten, Klettverschlüsse, Reisverschlüsse oder Druckknöpfe ausgebildet. Bevorzugt sind mehrere verschiedene Arten von Befestigungselementen oder nur eine Art von Befestigungselement vorgesehen. Die Befestigungselemente sollen nicht auf die hier genannten Arten begrenzt sein. Bevorzugt wird die Art bzw. Arten der Befestigungselemente auf den entsprechenden Anwendungsfall abgestimmt ausgewählt. Allen Arten von Befestigungselementen ist vorteilhaft gemein, dass eine lösbare formschlüssige Verbindung gewährleistet ist. Weiter bevorzugt sind an den Innenseiten des Rahmenelements jeweils mehrere Befestigungselemente oder ein durchgängiges Befestigungselement über die Länge der Innenseite verteilt angeordnet. Auf diese Weise wird eine besonders stabile Befestigung und auch Spannbarkeit des Gestricks gewährleistet.

Erfindungsgemäß weist das Gestrick einen oberen schlauchartigen Abschnitt mit zwei Öffnungsseiten auf. Solche schlauchartigen Gestricke können als jeweils gegenüberliegende flächige Strukturen betrachtet werden, die an zwei Außenkanten miteinander verbunden sind. Vorteilhafterweise ist ein solches Gestrick mit einem 3D-Strickverfahren hergestellt. Erfindungsgemäß ist eine erste Öffnungsseite geschlossen. Vereinfacht gesagt ergibt sich für den oberen Abschnitt demnach die Form einer Socke, die sehr einfach übergestülpt werden kann. Erfindungsgemäß ist der obere schlauchartige Abschnitt des Gestricks den oberen Bereich des Rahmenelements umschließend angeordnet. Diese Ausgestaltung und Anordnung des oberen Abschnitts gewährleistet eine einfache Positionierung des Gestricks am Rahmenelement, bevor die Umspannung durch die Befestigung mit den Befestigungselementen erfolgt. Bevorzugt weist das Gestrick einen im Wesentlichen flächigen und direkt vorne an den oberen Abschnitt anschließenden unteren Abschnitt auf. Besonders bevorzugt kontaktiert der untere Abschnitt den unteren Bereich des Rahmenelements von vorne und umgreift den unteren Bereich ausgehend von der Vorderseite des Rahmenelements zumindest teilweise von außen nach innen. Bevorzugt ist der untere Abschnitt als ein Flachgestrick ausgebildet. Ein Flachgestrick ist eine im Wesentlichen flächige Struktur, welche von Außenkanten umrandet ist. Diese flächige Struktur kann eine beliebige Form aufweisen, beispielsweise polygonförmig. Wird in dem Flachgestrick die Dicke vernachlässigt so kann von einer im Wesentlichen zweidimensionalen flächigen Struktur ausgegangen werden. Auf diese Weise kann der untere Abschnitt leicht an die Form des unteren Bereichs des Rahmenelements angepasst werden, sodass eine zumindest teilweise umspannende bzw. umgreifende Befestigung des Gestricks am Rahmenelement möglich ist.

Gemäß einer bevorzugten Ausführungsform sind die komplementären Befestigungselemente des Gestricks am oberen Abschnitt hinten randseitig an der offenen zweiten Öffnungsseite und am unteren Abschnitt randseitig seitlich und unten angeordnet. Durch die Anordnung der Befestigungselemente am Gestrick kann das Gestrick an den Befestigungselementen aller, die Innenfläche begrenzenden, Innenseiten des Rahmenelementes befestigt werden. Bevorzugt ist das Befestigungselement am oberen Abschnitt als durchgängig über die Länge der offenen zweiten Öffnungsseite verlaufend ausgebildet. Weiter bevorzugt sind die Befestigungselemente am unteren Abschnitt als mehrere Befestigungselemente über die Länge der linken und rechten sowie unteren Seite am Rand angeordnet ausgebildet.

Gemäß einer bevorzugten Ausführungsform sind an dem Gestrick mindestens zwei, insbesondere mindestens vier und besonders bevorzugt sechs, Befestigungseinheiten fest angeordnet.

Bevorzugt weisen die Befestigungseinheiten die am Gestrick angeordneten Befestigungselemente auf und jede Befestigungseinheit umfasst mindestens ein Befestigungselement. Bevorzugt sind die Befestigungseinheiten an dem Gestrick randseitig, insbesondere gegenüberliegend, befestigt, insbesondere angenäht, und leistenartig ausgebildet. Weiter bevorzugt ragen die an den Befestigungseinheiten angeordneten Befestigungselemente über eine Grundfläche des Gestricks hinaus. Bevorzugt sind die Befestigungseinheiten aus einem anderen Material als das Gestrick ausgebildet, insbesondere aus einem starren und reißfesten Material. Auf diese Weise sind die Befestigungseinheiten am Gestrick nicht elastisch und bieten den am Rahmenelement komplementär ausgebildeten Befestigungselementen einen festen Halt. Weiter vorteilhaft kann durch die nachträgliche Anbringung der Befestigungseinheiten und damit den Befestigungselementen die Position und die Art der jeweiligen Befestigungselemente an die vorliegenden Bedingungen bzw. Ausgestaltungen des Rahmenelements angepasst werden.

Bevorzugt ist zumindest im Bereich der Innenfläche ein Polsterstützelement in oder an dem Gestrick angeordnet und ausschließlich von diesem gehalten. Weiter bevorzugt ist das Polsterstützelement im Wesentlichen flächig ausgebildet. Bevorzugt erstreckt sich das Polsterstützelement im Wesentlichen parallel zu der Innenfläche. Weiter bevorzugt weist das Polsterstützelement eine einheitliche Dicke oder eine variierende Dicke auf. Weist das Polsterstützelement eine einheitliche Dicke auf, ist die Herstellung und Positionierung an oder in dem Gestrick besonders einfach. Im Falle einer variierenden Dicke kann dem Polsterstützelement eine zusätzliche Funktion eingeprägt werden, beispielsweise eine besonders an den Rücken eines Sitzbenutzers angepasste Struktur. Die Dicke des Polsterstützelements bezieht sich auf eine Erstreckung des Polsterstützelements von vorne nach hinten, d.h. im eingebauten Zustand ausgehend vom Sitzteil in Richtung des Rückenlehnenteils bzw. umgekehrt. Besonders bevorzugt weist das Polsterstützelement ein konvexes unteres Segment, das sich nach vorne in Richtung des Sitzteils wölbt und/oder ein konvexes mittleres Segment, das sich nach hinten wölbt, auf. Bevorzugt weist das untere Segment über die gesamte Breite des Polsterstützelements eine gleichmäßige Dicke auf, die sich nach oben hin verjüngt. Ebenfalls bevorzugt weist das mittlere Segment eine Dicke auf, die sich bezogen auf die Breite und die Höhe nach außen hin verjüngt. Bevorzugt weist das Polsterstützelement ein oberes Segment mit einer einheitlichen Dicke auf. Bevorzugt gewährleisten das untere Segment des Polsterstützelements eine Unterstützung der untersten Lordose und das mittlere Segment des Polsterstützelements eine Unterstützung der oberen Lordose. Durch die oben beschriebene Ausgestaltung des Polsterstützelements ermöglicht es, besonders auf längeren Fahrten, eine rückenschonende und angenehme Sitzhaltung für einen Sitzbenutzer.

Bevorzugt ist das Polsterstützelement an dem Gestrick rückseitig, d.h. auf der dem Sitzteil abgewandten Seite des Gestricks, befestigt, insbesondere angenäht, oder das Gestrick ist zumindest im Bereich der Innenfläche als doppellagiges Gestrick ausgebildet und weist eine rückseitige, verschließbare Öffnung auf, sodass im Gestrick ein Taschenelement bereitgestellt ist, in welches das Polsterstützelement über die Öffnung in das Gestrick einbringbar ist. Bevorzugt ist das Taschenelement komplementär zu dem Polsterstützelement ausgebildet. Besonders bevorzugt sind die Dimensionen des Taschenelements geringer gewählt als die Dimensionen des Polsterstützelements, sodass das Gestrick im Bereich des Taschenelements bei eingebrachtem Polsterstützelement um das Polsterstützelement herum gespannt ist. Auf diese Weise ist ein sicherer Halt und eine verbesserte Optik gewährleistet. Weiter bevorzugt ist die Öffnung mittels eines Verschlusselements, insbesondere eines Fadens, eines Klettverschlusses, eines Reisverschlusses oder Druckknöpfen, reversibel verschließbar. Ist das Polsterstützelement rückseitig an dem Gestrick befestigt, kann es besonders einfach und materialsparend im Nachhinein angebracht werden. Bei der Ausführung mit Taschenelement ist eine besonders positionsstabile und sichere Anordnung des Polsterstützelements innerhalb des Gestricks möglich und das Polsterstützelement ist so vor Beschädigung, beispielsweise beim Anbringen bzw. Entfernen des Gestricks vom Rahmenelement, geschützt. Die hier genannten Varianten des Verschlusselements sollen nicht als abschließend angesehen werden, wobei noch weitere Varianten denkbar sind. Entscheidend ist die reversible zerstörungsfreie Verschließbarkeit bzw. Öffnungsmöglichkeit der Öffnung, um das Polsterstützelement einzubringen oder herauszuholen.

Durch die obige bevorzugte Ausführung des Polsterstützelements und des Gestricks ist es besonders einfach das Polsterstützelement an die gegebenen Dimensionen des Sitzes und die geforderte Funktionalität anzupassen, wobei durch die Elastizität des Gestricks eine solche Anpassung des Polsterstützelements keine Änderungen des Gestricks erforderlich macht.

Bevorzugt ist der untere Abschnitt des Gestricks, an oder in dem das Polsterstützelement angeordnet ist, zumindest im Bereich der Innenfläche nach vorne in Richtung des Sitzteils konvex ausgebildet, sodass sich ein vorderseitig konvexer Bereich ausbildet, der von vorne die Optik eines aufgesetzten Kissens ergibt. Durch diese Anordnung kommt ein Rücken eines Sitzbenutzers zuerst mit dem im oder am Gestrick angeordneten Polsterstützelement in Berührung, sodass eine optimale Polsterung und Stützung gewährleistet ist.

Die Aufgabe wird ebenso von einer Inneneinrichtung eines Transportmittels, insbesondere ein Personentransportmittel, umfassend zumindest einen Fahrzeugsitz gelöst. Der Fahrzeugsitz kann dabei alle bereits oben beschriebenen Merkmale einzeln oder in Kombination miteinander aufweisen und umgekehrt.

Die Aufgabe wird ferner gelöst von einem Verfahren zur Herstellung eines Rückenlehnenteils für einen Fahrzeugsitz, umfassend zumindest die folgenden Schritte:
a. Bereitstellen eines Rahmenelements und eines Gestricks, wobei das Rahmenelement zumindest an zwei gegenüberliegenden Innenseiten jeweils mindestens ein Befestigungselement aufweist und das Gestrick jeweils ein komplementär dazu ausgebildetes und rückseitig angeordnetes Befestigungselement aufweist;
b. Anlegen des Gestricks an das Rahmenelement an einer dem Sitzteil zugewandten Vorderseite des Rahmenelements;
c. Befestigen des Gestricks an dem Rahmenelement durch die Befestigungselemente, sodass das Gestrick das Rahmenelement zumindest teilweise von außen nach innen umgreift;
d. Erhalten des Rückenlehnenteils mit dem das Rahmenelement zumindest teilweise umspannenden Gestrick, wobei das Gestrick einen oberen schlauchartigen Abschnitt mit zwei Öffnungsseiten aufweist, wobei eine erste Öffnungsseite geschlossen ist, wobei der obere schlauchartige Abschnitt des Gestricks den oberen Bereich des Rahmenelements umschließend angeordnet ist.

Das erfindungsgemäße Verfahren stellt eine einfache und zeitsparende Möglichkeit bereit, ein Rückenlehnenteil für einen Fahrzeugsitz mit einem Rahmenelement und einem Gestrick herzustellen. Dabei wird das Rahmenelement mit dem Gestrick zumindest teilweise umspannt bzw. bespannt, sodass das Gestrick das Rahmenelement ausgehend von einer dem Sitzteil zugewandten Vorderseite des Rahmenelements zumindest teilweise von außen nach innen umgreift und im Wesentlichen vollständig gespannt ist.

Gemäß einer bevorzugten Ausführungsform umfasst der Schritt b. des Anlegens des Gestricks an das Rahmenelement, ein Überstülpen eines oberen schlauchartigen Abschnitts des Gestricks, der zwei Öffnungsseiten aufweist, wobei eine erste Öffnungsseite geschlossen ist, wobei der obere schlauchartige Abschnitt des Gestricks den oberen Bereich des Rahmenelements umschließend angeordnet ist, wobei der obere Bereich durchgehend ausgebildet ist und zur Abstützung des Kopfes dient.

Gemäß einer bevorzugten Ausführungsform umfasst der Schritt c. des Befestigens des Gestricks an dem Rahmenelement, zunächst das Befestigen der am unteren Abschnitt randseitig unten angeordneten Befestigungselemente des Gestricks an den komplementären Befestigungselementen des Rahmenelements an der unteren Innenseite des unteren Bereichs. Daraufhin werden die am unteren Abschnitt randseitig seitlich, d.h. links und rechts, angeordneten Befestigungselemente des Gestricks an den komplementären Befestigungselementen des Rahmenelements an den seitlichen Innenseiten, d.h. links und rechts, des unteren Bereichs befestigt. Abschließend wird dann das Befestigungselement des Gestricks am oberen Abschnitt hinten randseitig an der offenen zweiten Öffnungsseite des oberen schlauchartigen Abschnitts an dem Befestigungselement an der Innenseite des oberen Bereichs des Rahmenelements befestigt, die die Innenfläche oberseitig begrenzt.

Das Befestigen des Gestricks am Rahmenelement kann auch als Umspannen oder Abspannen bezeichnet werden, da erst durch die vierseitige Befestigung durch die Befestigungselemente das Gestrick auf Spannung gebracht wird.

Alle für den Fahrzeugsitz oder die Inneneinrichtung oben beschriebenen Merkmale sollen einzeln oder in Kombination miteinander mutatis mutandis auch für das Verfahren als offenbart gelten und umgekehrt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine perspektivische Ansicht einer Inneneinrichtung nach einer Ausführungsform;
- Fig. 2: eine Explosionsdarstellung eines Rückenlehnenteils nach einer Ausführungsform;
- Fig. 3a: eine Vorderansicht eines Rückenlehnenteils nach einer Ausführungsform;
- Fig. 3b: eine Rückansicht eines Rückenlehnenteils nach einer Ausführungsform;
- Fig. 3c: eine Seitenansicht eines Rückenlehnenteils nach einer Ausführungsform;
- Fig. 4a: eine Schnittdarstellung entlang Schnitt S1 aus Fig. 3b eines Rückenlehnenteils nach einer Ausführungsform;
- Fig. 4b: eine Schnittdarstellung entlang Schnitt S2 aus Fig. 3b eines Rückenlehnenteils nach einer Ausführungsform;
- Fig. 4c: eine Schnittdarstellung entlang Schnitt S3 aus Fig. 3b eines Rückenlehnenteils nach einer Ausführungsform;
- Fig. 5a: eine perspektivische Ansicht eines Rahmenelements nach einer Ausführungsform;
- Fig. 5b: eine Vorderansicht eines Rahmenelements nach einer Ausführungsform;
- Fig. 5c: eine Rückansicht eines Rahmenelements nach einer Ausführungsform;
- Fig. 5d: eine Seitenansicht eines Rahmenelements nach einer Ausführungsform;
- Fig. 6a: eine Rückansicht eines Gestricks nach einer Ausführungsform;
- Fig. 6b: eine Seitenansicht eines Gestricks nach einer Ausführungsform;
- Fig. 7a-c: verschiedene Ansichten eines Polsterstützelements nach einer Ausführungsform;
- Fig. 8: ein Verfahren nach einer Ausführungsform.
- Fig. 9: eine mögliche Verwendung verschiedener Gestricke, schematisch dargestellt;
- Fig. 10a-c: verschiedene Strickmuster.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

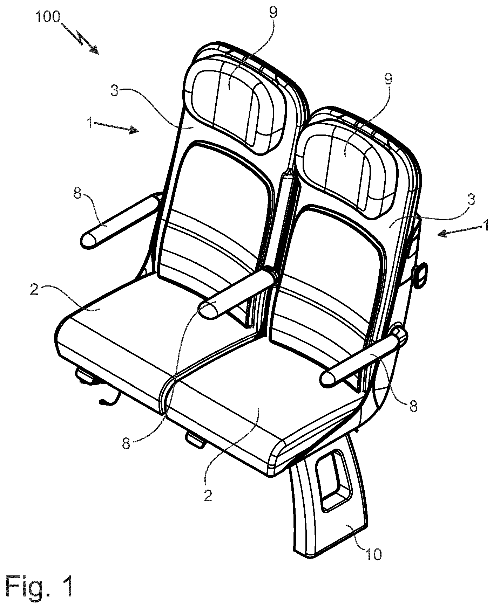

In Fig. 1 ist in einer perspektivischen Ansicht eine Inneneinrichtung eines Transportmittels, hier eines Zuges bzw. einer Bahn, in Form eines Doppelbahnsitzes dargestellt, der zwei erfindungsgemäßen Fahrzeugsitze umfasst, der die erfindungswesentlichen Merkmale der vorliegenden Erfindung aufweist.

Eine derartige Inneneinrichtung 100 besteht im Wesentlichen aus zwei nebeneinander angeordneten Fahrzeugsitzen 1, die jeweils ein Sitzteil 2, einen Rückenlehnenteil 3, Armlehnen 8, Kopfstützen 9 und einen cantileverartigen Sitzfuß 10 aufweisen.

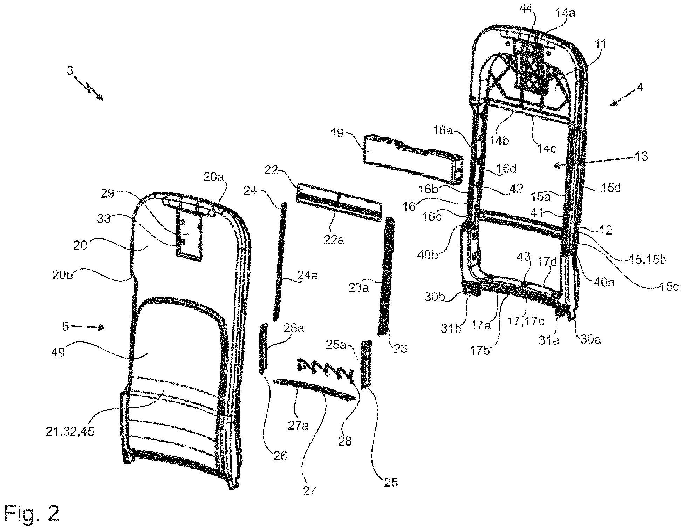

In Fig. 2 ist das Rückenlehnenteil 3 eines erfindungsgemäßen Fahrzeugsitzes 1 in einer Explosionsdarstellung gezeigt.

Das Rückenlehnenteil 3 umfasst ein Rahmenelement 4 und ein damit lösbar, insbesondere formschlüssig, verbundenes bzw. daran befestigtes Gestrick 5.

Das Rahmenelement 4 weist einen oberen Bereich 11 und einen damit verbundenen unteren Bereich 12 auf. Der obere Bereich 11 schließt zusammen mit dem unteren Bereich 12 eine Innenfläche 13 ein, wobei die Innenfläche 13 freiliegt, d.h. dort keine weiteren Elemente des Rahmenelements 4 angeordnet sind. Die Innenfläche 13 ist im Wesentlichen rechteckig ausgebildet.

Der obere Bereich 11 weist eine Oberseite 14a mit zwei abgerundeten Ecken auf und eine Querstrebe 14b mit einer Innenseite 14c, wobei die Querstrebe 14b bzw. die Innenseite 14c den oberen Bereich 11 nach unten zur Innenfläche 13 hin abschließt. Der obere Bereich 11 umfasst weiterhin eine Kopfstützenbefestigung 44, an welcher die Kopfstütze 9 befestigbar ist. Bevorzugt wird die Kopfstütze 9 mittels Schrauben am Rahmenelement 4 befestigt, sodass die Kopfstützenbefestigung 44 entsprechende Schraubgewinde aufweist. Zwischen der Kopfstützenbefestigung 44 und der Querstrebe 14b ist eine im Wesentlichen rechteckige Schaumstoffeinlage 19 angeordnet, die als Polsterung bzw. Stütze für die Schultern dient.

Der untere Bereich 12 umfasst eine erste Seitenstrebe 15 mit einer der Innenfläche 13 zugewandten Innenseite 15a, einer der Innenseite gegenüberliegenden Außenseite 15b, einer dem Sitzteil 2 zugwandten Vorderseite 15c und einer gegenüberliegenden Rückseite 15d. Der untere Bereich 12 umfasst eine zweite Seitenstrebe 16 mit einer der Innenfläche 13 zugewandten Innenseite 16a, einer der Innenseite gegenüberliegenden Außenseite 16b, einer dem Sitzteil 2 zugwandten Vorderseite 16c und einer gegenüberliegenden Rückseite 16d. Der untere Bereich 12 umfasst eine Querstrebe 17 mit einer der Innenfläche 13 zugewandten Innenseite 17a bzw. Oberseite 17b, einer der Innenseite gegenüberliegenden Außenseite 17b bzw. Unterseite 17b, einer dem Sitzteil 2 zugwandten Vorderseite 17c und einer gegenüberliegenden Rückseite 17d.

An der Innenseite 15a sind über deren Länge mehrere Befestigungselemente 41 in Form von Haken ausgebildet, die in die Innenfläche 13 hineinragen. An der Innenseite 16a sind über deren Länge mehrere Befestigungselemente 42 in Form von Haken ausgebildet, die in die Innenfläche 13 hineinragen. An der Innenseite 17a sind über deren Länge mehrere Befestigungselemente 43 in Form von Haken ausgebildet, die in die Innenfläche 13 hineinragen.

An der Außenseite 17b bzw. Unterseite 17b sind seitlich (links und rechts) jeweils ein Sitzfußverbindungselement 30a, 30b zur Verbindung mit dem Sitzfuß 10 und ein Sitzteilverbindungselement 31a, 31b zur Verbindung mit dem Sitzteil 2 angeordnet. Die Seitenstreben 15, 16 weisen jeweils eine Verbindungsachse 40a, 40b auf, sodass die Seitenstreben 15, 16 sozusagen zweigeteilt ausgebildet sind. Dies hat den Vorteil, dass das verbundene Sitzteil 2 vor und zurück geschoben werden kann und sich so nur der untere Teil der Seitenstreben 15, 16 des unteren Bereichs12 jeweils bis zu den Verbindungsachsen 40a, 40b mitbewegt. Des Weiteren ist eine Stützstrebe 18 vorgesehen, die jeweils endseitig mit den Rückseiten 15d, 16d der Seitenstreben 15, 16 verbunden ist und hinter der Innenfläche 13 verläuft. Die Stützstrebe 18 hat eine stabilisierende Wirkung.

Das Gestrick 5 weist einen oberen Abschnitt 20 und einen unteren Abschnitt 21 auf. Der obere Abschnitt 20 ist schlauchartig ausgebildet mit einer geschlossenen oberen Öffnungsseite 20a und einer offenen unteren Öffnungsseite 20b. Der obere Abschnitt 20 ist in angebrachten Zustand über den oberen Bereich 11 des Rahmenelements 4 gestülpt. Der obere Abschnitt 20 weist weiterhin eine Kopfstützenausnehmung 29 mit kreisrunden Aussparung 33 auf. Im Bereich der Kopfstützenausnehmung 29 wird die Kopfstütze 9 angeordnet, wobei die Aussparungen 33 zum Hindurchführen von Schrauben gedacht sind, die in der Kopfstützenbefestigung 44 des oberen Bereichs 11 befestigt werden.

Der untere Abschnitt 21 ist im Wesentlichen flächig ausgebildet und schließt direkt vorne an die zweite Öffnungsseite 20b des oberen Abschnitts 20 an. Im angebrachten Zustand kontaktiert der untere Abschnitt 21 den unteren Bereich 12 des Rahmenelements 4 von vorne. Der untere Abschnitt 21 umgreift bzw. umspannt ausgehend von der Vorderseite des Rahmenelements 4 den unteren Bereich 12 zumindest teilweise von außen nach innen.

Des Weiteren ist im unteren Abschnitt 21 das Gestrick 5 zumindest im Bereich der Innenfläche 13 als doppellagiges Gestrick 5 ausgebildet und weist eine rückseitige verschließbare Öffnung 34 auf, sodass im Gestrick 5 ein Taschenelement 45 bereitgestellt ist, in welches ein Polsterstützelement 32 über die Öffnung 34 in das Gestrick 5 einbringbar ist, wobei das Taschenelement 45 komplementär zu dem Polsterstützelement 32 ausgebildet ist. Das Polsterstützelement 32 ist im Bereich der Innenfläche 13 angeordnet und im Wesentlichen flächig ausgebildet und erstreckt sich im Wesentlichen parallel zu der Innenfläche 13. Das Gestrick 5 und das Polsterstützelement 32 sorgen im Bereich der Innenfläche 13 für die einzige Polsterung und/oder Stützung eines Rückens eines Sitzbenutzers, ohne das andere Elemente dort angeordnet sein müssen bzw. nötig sind.

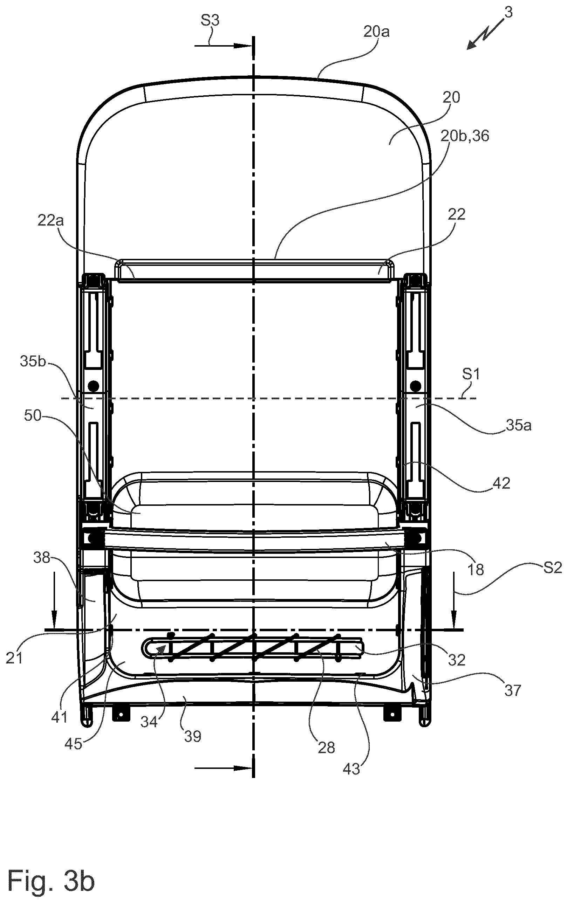

Rückseitig am Gestrick 5 sind eine obere Befestigungseinheit 22 mit einem über die ganze Länge durchgängigen Befestigungselement 22a, eine erste seitliche Befestigungseinheit 23 mit mehreren über die Länge verteilten Befestigungselementen 23a, eine zweite seitliche Befestigungseinheit 24 mit mehreren über die Länge verteilten Befestigungselementen 24a, eine dritte seitliche Befestigungseinheit 25 mit mehreren über die Länge verteilten Befestigungselementen 25a, eine vierte seitliche Befestigungseinheit 26 mit mehreren über die Länge verteilten Befestigungselementen 26a und eine untere Befestigungseinheit 27 mit mehreren über die Länge verteilten Befestigungselementen 27a. Details zu den Positionen der Befestigungseinheiten 22, 23, 24, 25, 26, 27 rückseitig am Gestrick werden in Zusammenhang mit Fig. 3b unten dargestellt. Die Befestigungselemente 23a, 24a, 25a, 26a, 27a sind als schlitzartige Ausnehmungen ausgebildet, die komplementär zu den hakenförmigen Befestigungselementen 41, 42, 43 ausgebildet sind, sodass eine lösbare formschlüssige Verbindung gewährleistet ist. Das Befestigungselement 22a ist leistenförmig ausgebildet und kann so mit der Querstrebe 14b bzw. der Innenseite 14c der Querstrebe 14b wechselwirken, um eine lösbare formschlüssige Verbindung auszubilden. Somit sind die Querstrebe 14b und die Innenseite 14c selbst als Befestigungselement ausgebildet bzw. kann als Befestigungselement 14b, 14c des Rahmenelements 4 bezeichnet werden, wobei das Rahmenelement 4 dieses Befestigungselement daher auch an der Innenseite 14c aufweist. Die seitlichen Befestigungseinheiten 23, 24, 25 ,26 sind links und rechts jeweils unterteile, d.h. in Befestigungseinheiten 23 und 25 und 24 und 26, da auch die Seitenstreben 15 und 16 des Rahmenelements 4 durch die Verbindungsachsen 40a, 40b unterteilt sind und auf diese Weise die Drehbarkeit um die Achse und die stabile Befestigung gewährleistet sind.

Des Weiteren ist ein Verschlusselement 28 dargestellt, welches vorgesehen ist eine Öffnung 34 im Gestrick 5 (hier nicht gezeigt; seihe Fig. 3b) lösbar kraftschlüssig zu verschließen.

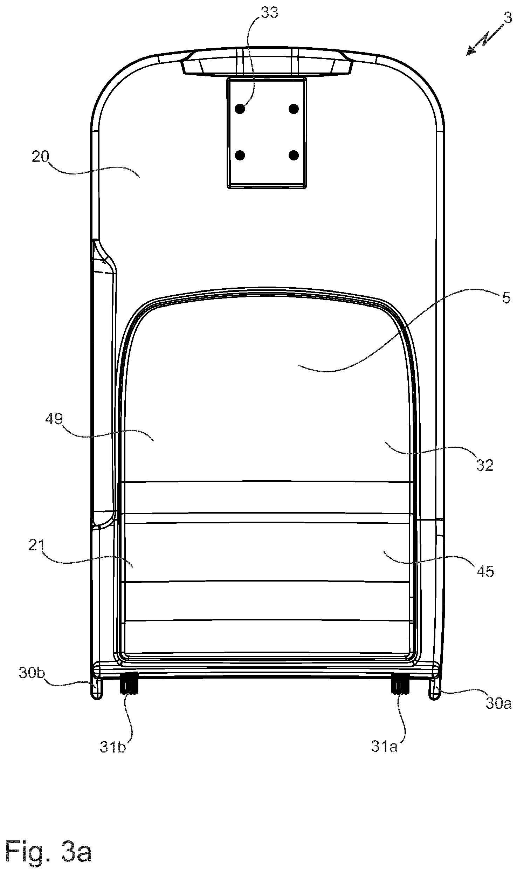

In Fig. 3a ist eine Vorderansicht eines Rückenlehnenteils 3 dargestellt. Dabei ist das Gestrick 5 zu erkennen, mit dem oberen Abschnitt 20 und dem unteren Abschnitt 21, der das Polsterstützelement 32, das im Taschenelement 45 innerhalb des Gestricks 5 angeordnet ist, aufweist. Im unteren Abschnitt 21 des Gestricks 5, in dem das Polsterstützelement 32 angeordnet ist, ist ein vorderseitig konvexer Bereich 49 zumindest im Bereich der Innenfläche 13 ausgebildet, der sich nach vorne in Richtung des Sitzteils 2 wölbt und über den unteren Bereich 12 des Rahmenelements 4 nach vorne hinausragt, wodurch eine kissenartige Optik erzeugt wird, sodass es den Anschein eines von vorne aufgesetzten Kissens hat. Im oberen Abschnitt 20 sind die vier Aussparungen 33 quadratförmig oder rechtecksförmig angeordnet. Des Weiteren sind die seitlich an der Außenseite 17b bzw. Unterseite 17b angeordneten Sitzfußverbindungselemente 30a, 30b zur Verbindung mit dem Sitzfuß 10 und Sitzteilverbindungselemente 31a, 31b zur Verbindung mit dem Sitzteil 2 zu sehen. Das Gestrick 5 ist derart ausgebildet, dass die Sitzfußverbindungselemente 30a, 30b jeweils außenseitig durch das Gestrick 5 bedeckt bzw. umspannt sind. In Fig. 3b ist eine Rückansicht eines Rückenlehnenteils 3 dargestellt. Dabei ist der obere schlauchartige Abschnitt 20 des Gestricks über den oberen Bereich 11 des Rahmenelements 4 gestülpt und die Befestigungselemente 22a, 23a, 24a, 25a, 26a, 27a an den Befestigungseinheiten 22, 23, 24, 25, 26, 27 des Gestricks sind mit den komplementären Befestigungselementen 14b, 14c, 41, 42, 43 verbunden. Die Befestigungseinheiten 22, 23, 24, 25 26, 27 sind jeweils randseitig am Gestrick 5 befestigt, insbesondre angenäht. Die obere Befestigungseinheit 22 ist an einem oberen Randbereich 36 angeordnet, der an der zweiten Öffnungsseite 20b ausgebildet ist, und so mit der Querstrebe 14b bzw. Innenseite 14c der Querstrebe 14b als Befestigungselement verbunden werden kann. Die erste 23 und die dritte seitliche Befestigungseinheit 25 sind an einem zweiten seitlichen Randbereich 38 des Gestricks 5 angeordnet. Die zweite 24 und die vierte seitliche Befestigungseinheit 26 sind an einem ersten seitlichen Randbereich 37 des Gestricks 5 angeordnet. Die untere Befestigungseinheit 27 ist an einem unteren Randbereich 39 des Gestricks 5 angeordnet. Im angebrachten Zustand sind die seitlichen Randbereiche 37, 38 des Gestricks 5 derart angeordnet, dass sie die Seitenstreben 15, 16 des Rahmenelements 4 von vorne ausgehend von den Vorderseiten 15c, 16c über die Außenseiten 15b, 16b und die Rückseiten 15d, 16d zu den Befestigungselementen 41, 42 an den Innenseiten 15a, 16a hin umgreifen bzw. umspannen. Im angebrachten Zustand ist der untere Randbereiche 39 des Gestricks 5 derart angeordnet, dass er die Querstrebe 17 des Rahmenelements 4 von vorne ausgehend von der Vorderseite 17c über die Außenseiten bzw. die Unterseite 17b und die Rückseite 17d zu den Befestigungselementen 43 an der Innenseite bzw. Oberseite 17a hin umgreift bzw. umspannt.

An den Seitenstreben 15, 16 ist über dem Gestrick 5 bzw. den seitlichen Randbereichen 37, 38 jeweils eine Montageleiste 35a, 35b angeordnet, die bevorzugt mit der Rückseite 15d, 16d verschraubt sind. Die Montageleisten 35a, 35b dienen zur Befestigung des Rückenlehnenteils 3. Ebenfalls ist an den Seitenstreben 15, 16 über dem Gestrick 5 bzw. den seitlichen Randbereichen 37, 38 die Stützstrebe 18 jeweils endseitig verbunden, bevorzugt mit den Rückseiten 15d, 16d verschraubt.

Im unteren Abschnitt 21 des Gestricks 5 ist im Bereich der Innenfläche 13 ein rückseitig konvexer Bereich 50 ausgebildet, der sich nach hinten weg von Sitzteil 2 wölbt. Der rückseitig konvexe Bereich 50 ist im Bereich der Stützstrebe 18, sodass bei einer Belastung des Gestricks 5 durch einen Sitzbenutzer und der dadurch auftretenden Dehnung des Gestricks 5 mit einer Ausdehnung nach hinten, der rückseitig konvexe Bereich 50 die Stützstrebe 18 kontaktiert und dadurch eine weitere Stützung der oberen Lordose gewährleistet ist.

Ferner ist die als horizontaler Schlitz ausgebildete Öffnung 34 rückseitig im Gestrick 5 dargestellt, über welche das Polsterstützelement 32 in das Taschenelement 45 im unteren Abschnitt 21 des dort zumindest teilweise doppellagig ausgebildeten Gestricks 5 einbringbar ist. Die Öffnung 34 ist durch das schnurartige Verschlusselement 28 lösbar kraftschlüssig verschlossen, sodass das Polsterstützelement 32 nicht ungewollt aus dem Taschenelement 45 herausfallen kann.

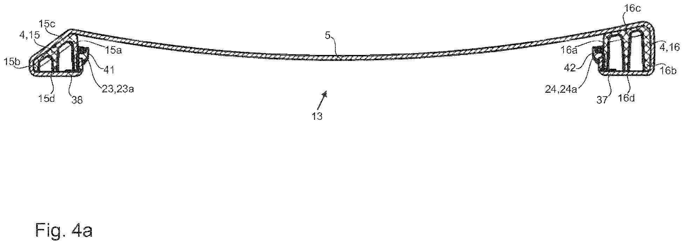

In der Fig. 3b sind ebenfalls drei Schnittachsen S1, S2, S3 eingezeichnet, welche die Schnitte durch das Rückenlehnenteil 3, die in den Fig. 4a-4c dargestellt sind, angibt.

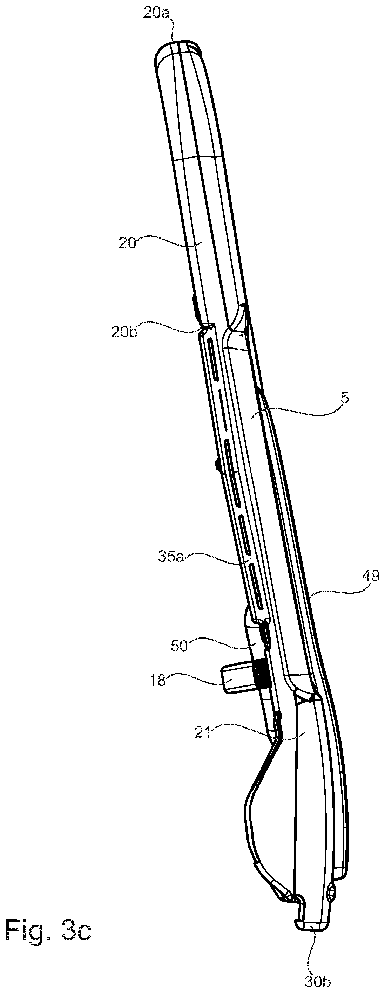

Die Fig. 3c zeigt eine Seitenansicht des Rückenlehnenteils 3 gemäß der Ausführungsform der Fig. 3a und 3b. In dieser Darstellung sind der vorderseitig konvexe Bereich 49 und der rückseitig konvexe Bereich 50 zu erkennen.

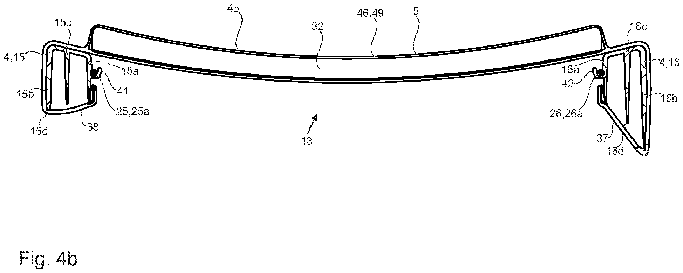

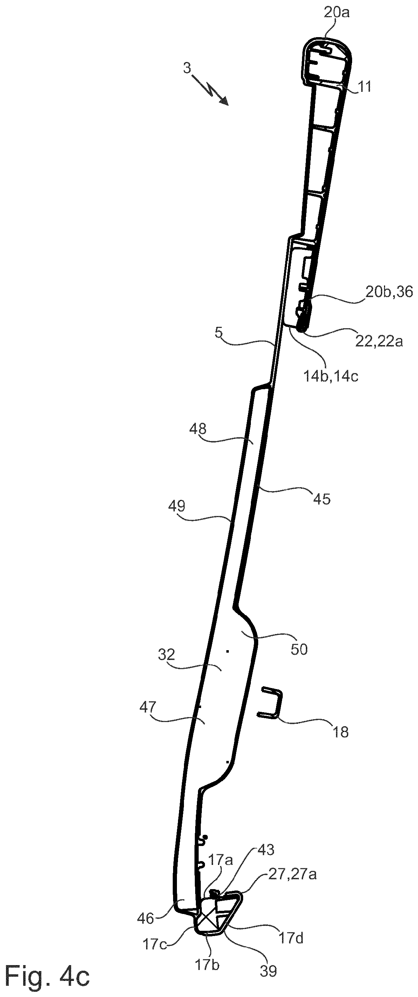

In den Fig. 4a, 4b, 4c ist jeweils eine Schnittdarstellung eines Rückenlehnenteils 3 entlang der Schnittachsen S1, S2, S3 gemäß Fig. 3b gezeigt.

In der Fig. 4a ist der Schnitt entlang der Schnittachse S1 dargestellt, wobei das Rückenlehnenteil 3 bzw. das Gestrick 5 gemäß einer Ausführungsform dargestellt ist, die kein Polsterstützelement 32 aufweist, sondern lediglich einlagig ausgebildet ist. Dabei ist zu erkennen, wie das Gestrick 5 bzw. die seitlichen Randbereiche 37, 38 des Gestricks 5 die Seitenstreben 15, 16 des Rahmenelements 4 von vorne ausgehend von den Vorderseiten 15c, 16c über die Außenseiten 15b, 16b und die Rückseiten 15d, 16d zu den Befestigungselementen 41, 42 an den Innenseiten 15a, 16a hin umgreifen bzw. umspannen. Der untere Randbereich 39 ist analog zu den dargestellten seitlichen Randbereichen 37, 38 umgreifend bzw. umspannend angeordnet. Es findet im Wesentlichen jeweils eine Umlenkung des Gestricks 5 bzw. der Randbereiche 37, 38, 39 um 90° statt. Das Gestrick 5 ist im Bereich der Innenfläche 13 freischwingend angeordnet. In diesem Abschnitt erstreckt sich das Gestrick 5 auf bzw. über der Innenfläche 13.

Die Seitenstreben 15, 16 sind mit Aussparungen, d.h. nicht durchgängig ausgebildet. Dies ermöglicht einen geringen Materialaufwand und damit eine Gewichtsreduktion. Die Vorderseite 15c der ersten Seitenstrebe 15 ist, ausgehend von der Innenseite 15a zur Außenseite 15b hin, abfallend verlaufend ausgebildet, d.h. die Innenseite 15a ist länger als die Außenseite 15b. Die Vorderseite 16c der zweiten Seitenstrebe 16 ist, ausgehend von der Außenseite 16b zur Innenseite 16a hin, abfallend verlaufend ausgebildet, d.h. die Außenseite 16b ist länger als die Innenseite 16a.

In der Fig. 4b ist der Schnitt entlang der Schnittachse S2 dargestellt, wobei das Rückenlehnenteil 3 bzw. das Gestrick 5 gemäß einer Ausführungsform dargestellt ist, die ein Polsterstützelement 32 aufweist, und zumindest auch im Bereich der Innenfläche 13 doppellagig ausgebildet ist.

Im Bereich der Innenfläche 13 ist das Polsterstützelement 32 innerhalb des doppellagigen Gestricks 5 zu erkennen, welches den vorderseitig konvexen Bereich 49 ausbildet, der sich nach vorne in Richtung des Sitzteils 2 wölbt und über das Rahmenelement 4 hinausragt. In diesem gezeigten Abschnitt erstreckt sich das Gestrick 5 auf bzw. über der Innenfläche 13.

Die weiteren in der Fig. 4b gezeigten Ausführungsform entsprechen mutatis mutandis den oben beschriebenen Merkmalen in der Fig. 4a.

In der Fig. 4c ist der Schnitt entlang der Schnittachse S3 dargestellt, wobei das Rückenlehnenteil 3 bzw. das Gestrick 5 gemäß einer Ausführungsform dargestellt ist, die ein Polsterstützelement 32 aufweist, und zumindest auch im Bereich der Innenfläche 13 doppellagig ausgebildet ist.

In der Schnittansicht der Fig. 4c lässt sich die Umspannung des Rahmenelements 4 mit dem Gestrick 5 besonders gut erkennen. Die obere Befestigungseinheit 22 ist an einem oberen Randbereich 36 angeordnet, der an der zweiten Öffnungsseite 20b ausgebildet ist, und so mit der Querstrebe 14b bzw. Innenseite 14c der Querstrebe 14b als Befestigungselement formschlüssig verbunden ist. Die untere Befestigungseinheit 27 ist an dem unteren Randbereich 39 des Gestricks 5 angeordnet und weist die Befestigungselemente 27a auf, die mit den Befestigungselementen 43 an der Innenseite 17a der Querstrebe 17 formschlüssig verbunden sind. Im angebrachten Zustand ist der untere Randbereich 39 des Gestricks 5 derart angeordnet, dass er die Querstrebe 17 des Rahmenelements 4 von vorne ausgehend von der Vorderseite 17c über die Außenseiten bzw. die Unterseite 17b und die Rückseite 17d zu den Befestigungselementen 43 an der Innenseite bzw. Oberseite 17a hin umgreift bzw. umspannt.

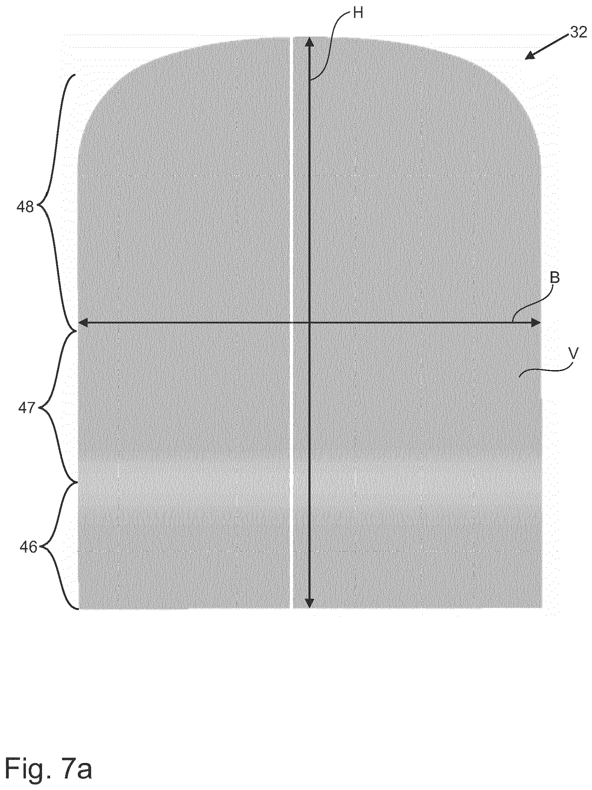

Des Weiteren ist das Polsterstützelement 32 innerhalb des doppellagigen Gestricks 5 zu erkennen, welches im Bereich der Innenfläche 13 angeordnet ist. Dabei ist der vorderseitig konvexe Bereich 49 zu erkennen, der durch das gesamte Polsterstützelement 32 (alle Segmente 46, 47, 48; siehe Fig. 7a-7c) im Gestrick 5 ausgebildet ist. Der rückseitig konvexe Bereich 50 ist nur abschnittsweise ausgebildet (durch das mittlere Segment 47; siehe Fig. 7a-7c), wobei der rückseitig konvexe Bereich 50 innerhalb der Innenfläche 13 angeordnet ist und diese auch teilweise nach hinten überragen kann. Der rückseitig konvexe Bereich 50 bzw. das mittlere Segment 47 des Polsterstützelements 32 sind auf der gleichen Höhe angeordnet, sodass ein Kontakt möglich ist. Ein unteres Segment 46 des Polsterstützelements 32 zeigt eine konvexe Wölbung nach vorne in Richtung des Sitzteils 2 (siehe Fig. 7a-7c).

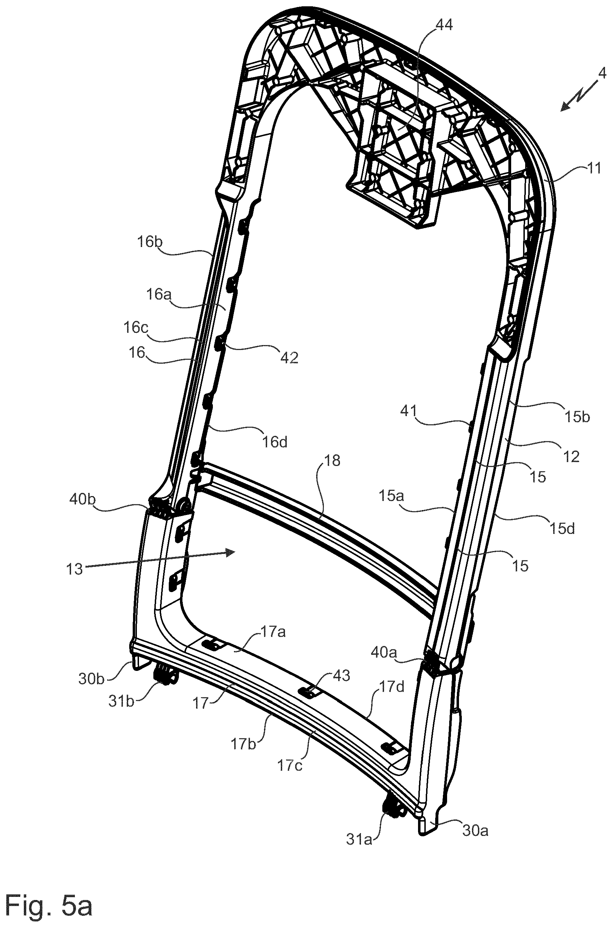

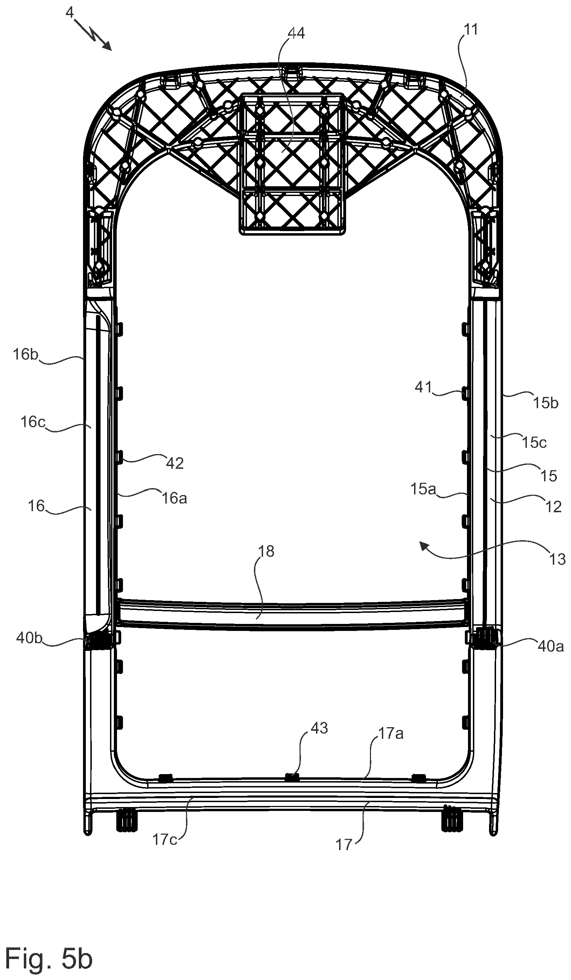

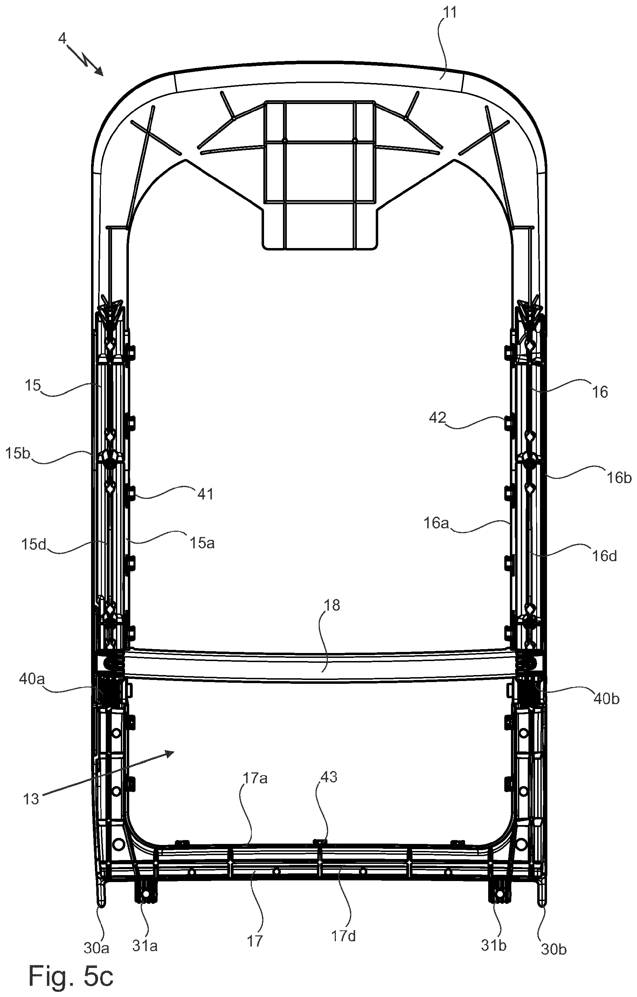

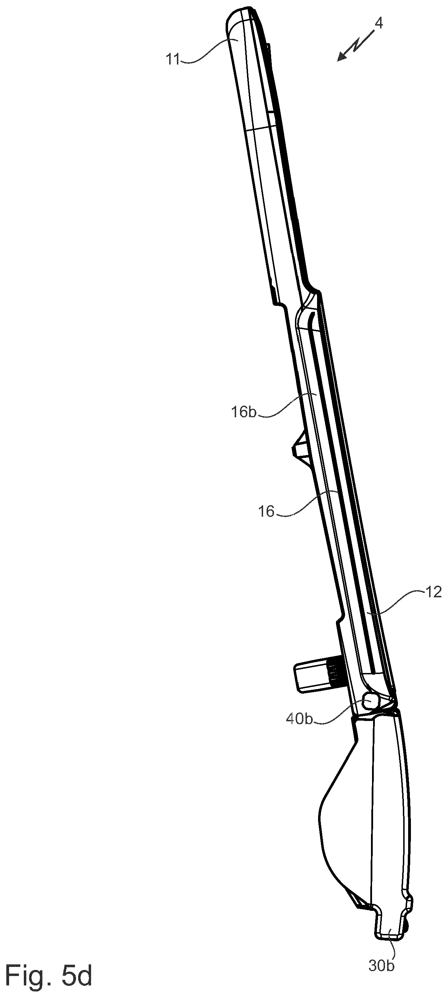

In den Fig. 5a, 5b, 5c, 5d ist jeweils eine Ansicht eines Rahmenelements 4 dargestellt, wobei in Fig. 5a eine perspektivische Ansicht, in Fig. 5b eine Vorderansicht, in Fig. 5c eine Rückansicht und in Fig. 5d eine Seitenansicht gezeigt sind.

Der obere Bereich 11 des Rahmenelements 4 in den Fig. 5a-5d ist zur Übersichtlichkeit nur teilweise mit der Kopfstützenbefestigung 44 dargestellt, jedoch nicht mit der Querstrebe 14b, wie in der Explosionsdarstellung in Fig. 2 zu sehen.

Die Innenseiten 15a, 16a, 17a der ersten Seitenstrebe 15, der zweiten Seitenstrebe 16 und der Querstrebe 17 sind mit den als Haken ausgebildeten Befestigungselementen 41, 42, 43 dargestellt. Die hakenförmigen Befestigungselemente 41, 42, 43 ragen ausgehend von den Innenseiten 15a, 16a, 17a in die Innenfläche 13 hinein und weisen nach vorne in Richtung des Sitzteils 2, sodass die komplementären Befestigungselemente 23a, 24a, 25a, 26a des Gestricks 5 entsprechend eingehakt werden können. Die Befestigungselemente 41, 42, 43 sind über die ganze Länge der ersten 15, der zweiten Seitenstrebe 16 und der Querstrebe 17 an den Innenseiten 15a, 16a, 17a angeordnet, wobei mehrere einzelne Befestigungselemente 41, 42, 43 vorgesehen sind.

Die Seitenstreben 15, 16 weisen jeweils die Verbindungsachse 40a, 40b auf, sodass die Seitenstreben 15, 16 sozusagen zweigeteilt ausgebildet sind. Dies hat den Vorteil, dass das verbundene Sitzteil 2 vor und zurück geschoben werden kann und sich so nur der untere Teil der Seitenstreben 15, 16 des unteren Bereichs 12 jeweils bis zu den Verbindungsachsen 40a, 40b mitbewegt. Des Weiteren ist die Stützstrebe 18 angeordnet, die jeweils endseitig mit den Rückseiten 15d, 16d der Seitenstreben 15, 16 verbunden ist und hinter der Innenfläche 13 verläuft. Die Stützstrebe 18 hat eine stabilisierende Wirkung und zusätzliche eine Stützfunktion in Zusammenwirkung mit dem rückseitig konvexen Bereich 50 bzw. dem mittleren Segment 47.

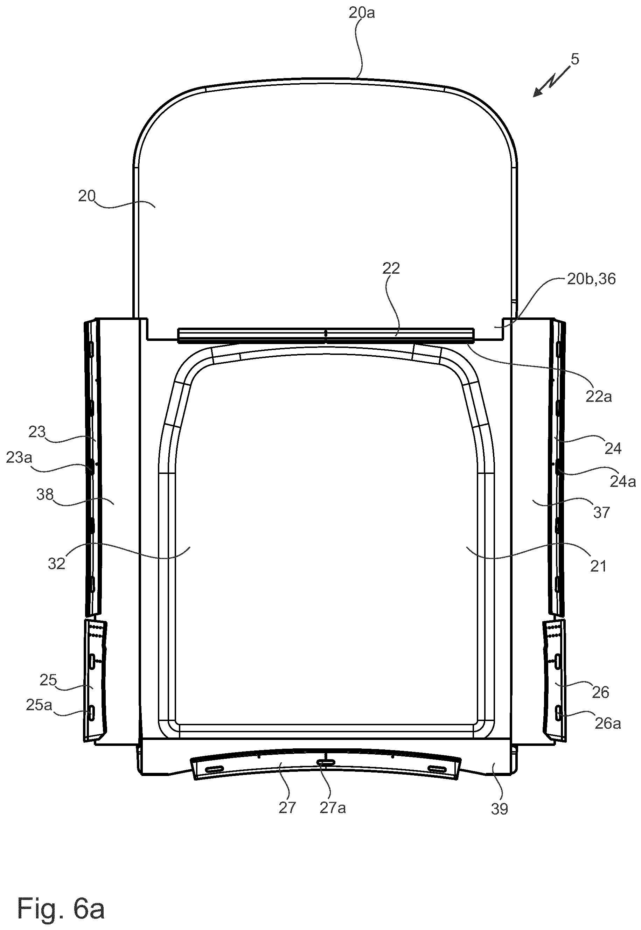

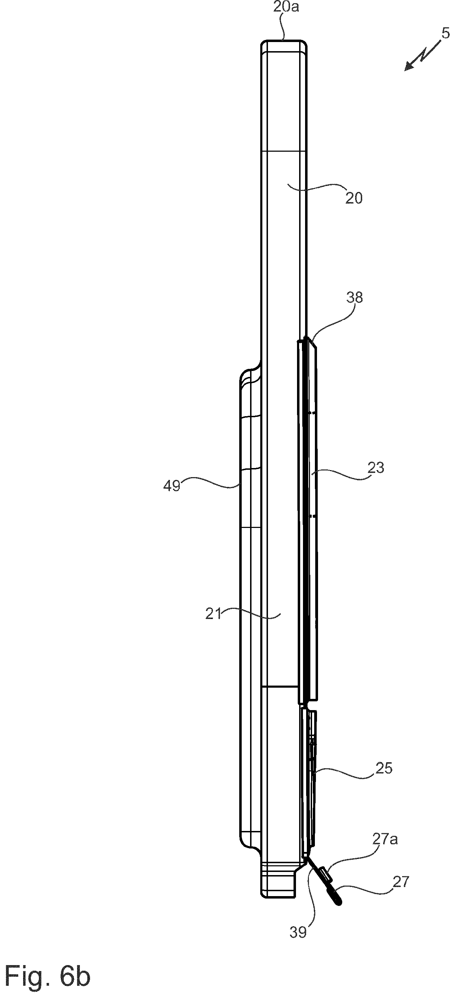

Die Fig. 6a und 6b zeigen ein Gestrick 5 gemäß einer Ausführungsform in einem nicht angebrachten Zustand, sodass lediglich das Gestrick 5 vor der Umspannung des Rahmenelements 4 zu sehen ist.

In Fig. 6a ist eine Rückansicht des Gestricks 5 in einem ausgebreiteten Zustand zu sehen. Das Gestrick 5 weist den oberen schlauchartigen Abschnitt 20 mit den zwei Öffnungsseiten 20a, 20b auf, wobei die erste Öffnungsseite 20a geschlossen ist, und den im Wesentlichen flächigen und direkt vorne an den oberen Abschnitt 20 anschließenden unteren Abschnitt 21.

Die Befestigungseinheiten 22, 23, 24, 25, 26, 27 sind jeweils randseitig am Gestrick 5 befestigt, insbesondere angenäht. Die obere Befestigungseinheit 22 ist an dem oberen Randbereich 36 angeordnet, der an der zweiten Öffnungsseite 20b ausgebildet ist. Die erste 23 und die dritte seitliche Befestigungseinheit 25 sind an dem ersten seitlichen Randbereich 38 des Gestricks 5 angeordnet. Die zweite 24 und die vierte seitliche Befestigungseinheit 26 sind an einem zweiten seitlichen Randbereich 37 des Gestricks 5 angeordnet. Die untere Befestigungseinheit 27 ist an dem unteren Randbereich 39 des Gestricks 5 angeordnet.

Die Befestigungseinheiten 22, 23, 24, 25, 26, 27 weisen die am Gestrick angeordneten Befestigungselemente 22a, 23a, 24a, 25a, 26a, 27a auf. Die Befestigungseinheiten 22, 23, 24, 25, 26, 27 sind leistenartig ausgebildet, wobei die an den Befestigungseinheiten 22, 23, 24, 25, 26, 27 angeordneten Befestigungselemente 22a, 23a, 24a, 25a, 26a, 27a über eine Grundfläche des Gestricks 5 hinausragen. Das Befestigungselement 22a an der oberen Befestigungseinheit 22 ist leistenartig ausgebildet. Die Befestigungselemente 23a, 24a, 25a, 26a, 27a sind lochförmig ausgebildet, sodass sie mit den komplementären hakenförmigen Befestigungselementen 41, 42, 43 des Rahmenelements 4 formschlüssig verbunden werden können. Die Befestigungseinheiten 23 und 24 und die Befestigungseinheiten 25 und 26 sind jeweils gegenüberliegend am Gestrick 5 angeordnet. Die Randbereiche 37, 38, 39 sind flügelartig ausgebildet, sodass sie sich zum Umspannen des Rahmenelements 4 einfach um die Streben 15, 16, 17 herumklappen lassen.

In der Fig. 6b ist eine Seitenansicht des Gestricks 5 dargestellt. Aus dieser Ansicht lässt sich der vorderseitig konvexe Bereich 49 erkennen, der sich in Richtung des Sitzteils 2 herauswölbt und von dem übrigen Gestrick 5 nach vorne abhebt. Durch das Polsterstützelement 32 wird der Bereich 49 stabilisiert bzw. ausgefüllt.

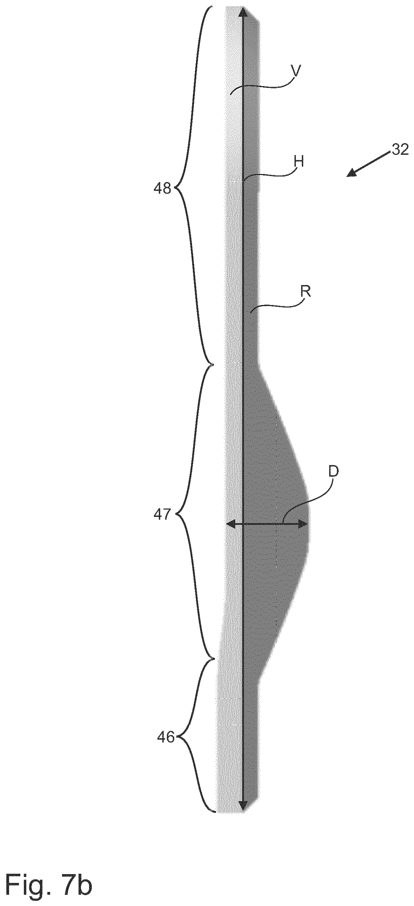

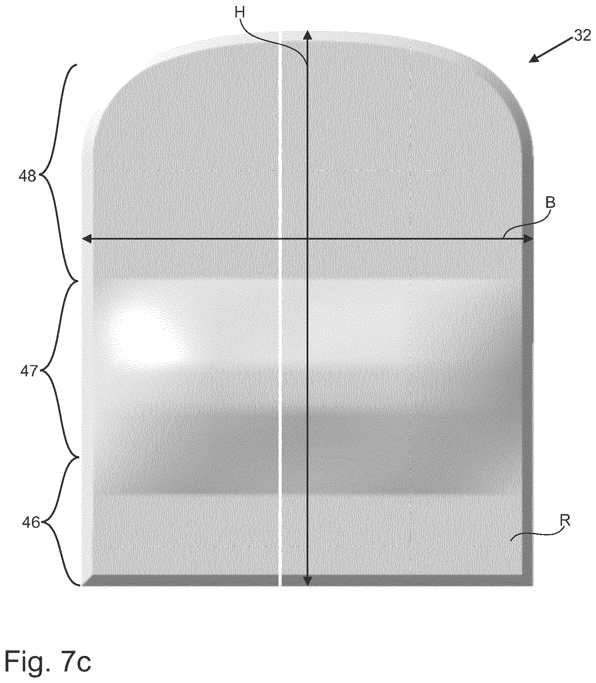

In den Fig. 7a, 7b und 7c ist ein Polsterstützelement 32 in verschiedenen Ansichten dargestellt. Das Polsterstützelement 32 weist eine Höhe H, eine Breite B und eine Dicke D (die Dicke kann auch als Tiefe bezeichnet werden) auf.

In Fig. 7a ist das Polsterstützelement 32 von vorne gezeigt. Die Vorderseite V des Polsterstützelements 32 weist dabei in eingebautem bzw. eingebrachten Zustand im Gestrick 5 nach vorne in Richtung des Sitzteils 2.

In Fig. 7b ist das Polsterstützelement 32 seitlich gezeigt. Hier ist die Dicke D des Polsterstützelements 32 ersichtlich.

In Fig. 7c ist das Polsterstützelement 32 von hinten gezeigt. Die Rückseite R des Polsterstützelements 32 weist dabei in eingebautem bzw. eingebrachten Zustand im Gestrick 5 nach hinten.

Das Polsterstützelement 32 weist ein unteres Segment 46, ein mittleres Segment 47 und ein oberes Segment 48 auf, wobei die Segmente 46, 47, 48 in der genannten Reihe bezogen auf die Höhe H des Polsterstützelements 32 von unten nach oben angeordnet sind.

Die Segmente 46, 47, 48 bilden den vorderseitig konvexen Bereich 49 des Gestricks 5 aus. Das mittlere Segment 47 bildet den rückseitig konvexen Bereich 50 des Gestricks aus.

Wie insbesondere in Fig. 7b und 7c zu erkennen ist, weist das Polsterstützelement 32 über die Höhe H und auch die Breite B eine variierende Dicke D auf. Das untere Segment 46 ist konvex ausgebildet und wölbt sich nach vorne in Richtung des Sitzteils 2. Das mittlere Segment 47 ist ebenfalls konvex ausgebildet und wölbt sich aber nach hinten. Das untere Segment 46 weist über die gesamte Breite B des Polsterstützelements 32 eine gleichmäßige Dicke D auf, die sich in der Höhe H nach oben hin verjüngt, d.h. abnimmt. Das mittlere Segment 47 weist eine Dicke D auf, die sich bezogen auf die Breite B und die Höhe H nach außen hin verjüngt, d.h. das mittlere Segment 47 hat in der Mitte die größte Dicke D, die in der Höhe H und der Breite B abnimmt. Das obere Segment 48 weist eine einheitliche Dicke D auf. Durch die gezeigte Ausgestaltung des Polsterstützelements 32 gewährleistet das untere Segment 46 eine Unterstützung der untersten Lordose und das mittlere Segment 47 eine Unterstützung der oberen Lordose.

Das Polsterstützelement 32 ist im Wesentlichen rechteckig ausgebildet, wobei die bezogen auf die Höhe H oberen Ecken abgerundet ausgebildet sind.

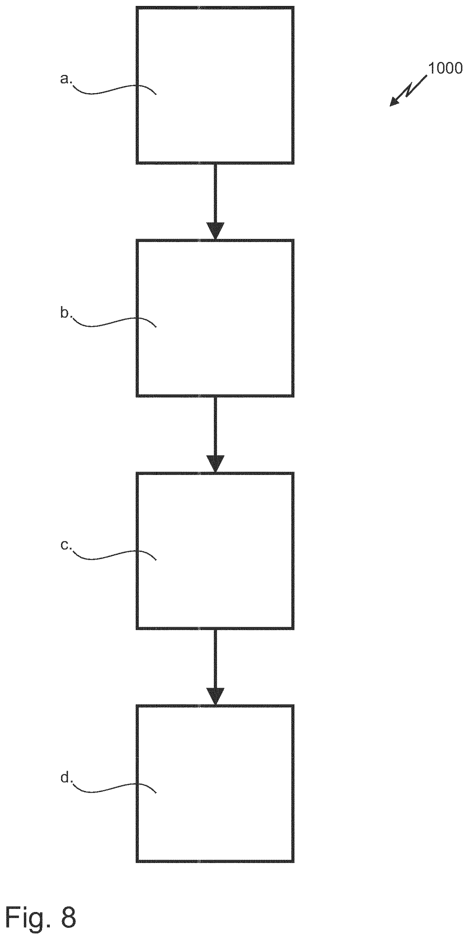

In Fig. 8 ist ein Verfahren 1000 zur Herstellung eines Rückenlehnenteils 3 für einen Fahrzeugsitz 1 dargestellt, umfassend zumindest die folgenden Schritte:
a. Bereitstellen eines Rahmenelements 4 und eines Gestricks 5, wobei das Rahmenelement 4 zumindest an zwei gegenüberliegenden Innenseiten 14c, 15a, 16a, 17a jeweils mindestens ein Befestigungselement 14b, 14c, 41, 42, 43 aufweist und das Gestrick 5 jeweils ein komplementär dazu ausgebildetes und rückseitig angeordnetes Befestigungselement 22a, 23a, 24a, 25a, 26a, 27a aufweist;
b. Anlegen des Gestricks 5 an das Rahmenelement 4 an einer dem Sitzteil 2 zugewandten Vorderseite des Rahmenelements 4;
c. Befestigen des Gestricks 5 an dem Rahmenelement 4 durch die Befestigungselemente 14b, 14c, 15a, 16a, 17a, 22a, 23a, 24a, 25a, 26a, 27a, sodass das Gestrick 5 das Rahmenelement 4 zumindest teilweise von außen nach innen umgreift;
d. Erhalten des Rückenlehnenteils 3 mit dem das Rahmenelement 4 zumindest teilweise umspannenden Gestrick 5.

Der Schritt b. des Anlegens des Gestricks 5 an das Rahmenelement 4 umfasst ein Überstülpen eines oberen schlauchartigen Abschnitts 20 des Gestricks 5, der zwei Öffnungsseiten 20a, 20b aufweist, wobei eine erste Öffnungsseite 20a geschlossen ist, wobei der obere schlauchartige Abschnitt 20 des Gestricks 5 den oberen Bereich 11 des Rahmenelements 4 umschließend angeordnet ist, wobei der obere Bereich 11 durchgehend ausgebildet ist und zur Abstützung des Kopfes dient.

Der Schritt c. des Befestigens des Gestricks 5 an dem Rahmenelements 4 umfasst zunächst das Befestigen der am unteren Abschnitt 21 randseitig (am unteren Randbereich 39) unten angeordneten Befestigungselemente 27a des Gestricks 5 an den komplementären Befestigungselementen 43 des Rahmenelements 4 an der unteren Innenseite 17a des unteren Bereichs 12 des Rahmenelements 4. Daraufhin werden die am unteren Abschnitt 21 randseitig (erster und zweiter seitlicher Randbereich 37, 38) seitlich, d.h. links und rechts, angeordneten Befestigungselemente 23a, 24a, 25a, 26a des Gestricks 5 an den komplementären Befestigungselementen 42, 43 des Rahmenelements 4 an den seitlichen Innenseiten 15a, 16a, d.h. links und rechts, des unteren Bereichs 12 befestigt. Abschließend wird dann das Befestigungselement 22a des Gestricks 5 am oberen Abschnitt 11 hinten randseitig (oberer Randbereich 36) an der offenen zweiten Öffnungsseite 20b des oberen schlauchartigen Abschnitts 20 an dem Befestigungselement (Querstrebe und Innenseite des oberen Bereichs) 14b, 14c des Rahmenelements 4 befestigt, die die Innenfläche 13 oberseitig begrenzt.

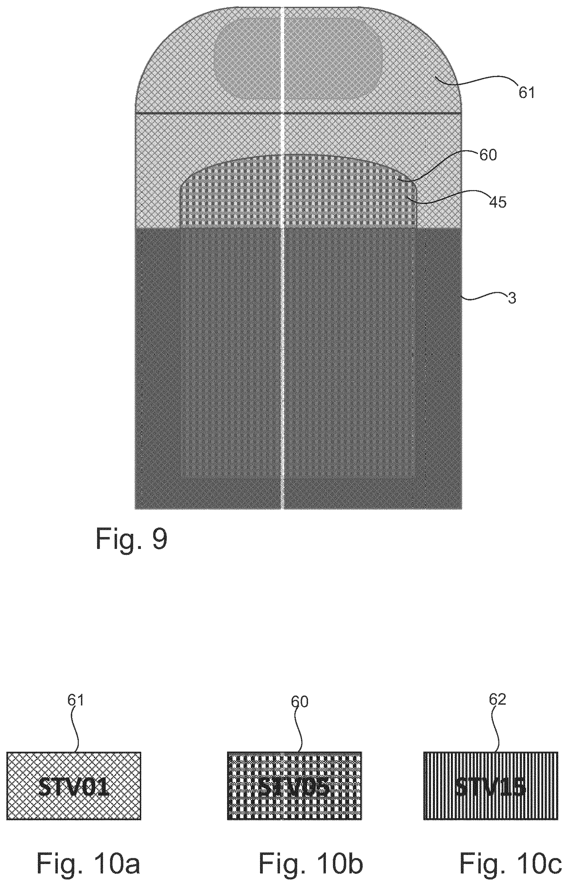

In der Figur 9 ist die Rückenlehnenteil 3 schematisch in einer Vorderansicht dargestellt und zeigt, dass in verschiedenen Bereichen verschiedene Gestricke 5 durch verschiedenartige Musterung bzw. Strickmusterung dargestellt ist. Im Bereich des Taschenelements 45 bei einer vorderseitigen Betrachtung, also zu einer auf dem Sitz sitzenden Person zugewandt, ist ein erstes Strickmuster 60 dargestellt. In dem weiteren Bereich um das Taschenelement 45 herum ist ein zweites Strickmuster 61 vorgesehen. Weiter ist es im rückwärtigen Bereich des Taschenelements 45 vorgesehen, ein drittes Strickmuster 62 vorzusehen. Die Strickmuster 60, 61, 62 sind in den weitere Figuren 10a, 10b und 10c genauer dargestellt.

Die Verwendung verschiedener Strickmuster 60, 61, 62 kann vorteilhaft sein, da sie dem jeweiligen Einsatzbereich angepasst sind. Das Taschenelement 45 steht dabei immer in Kontakt zu der Person und sollte daher möglichst abriebfest sein. Im rückwärtigen Bereich dazu ist eine erhöhte Dehnbarkeit vorteilhaft, um der Krafteinwirkung der Person auf das Gestrick 5 Rechnung zu tragen.

### Bezugszeichenliste

- 1: Fahrzeugsitz
- 100: Inneinrichtung
- 1000: Verfahren
- 2: Sitzteil
- 3: Rückenlehnenteil
- 4: Rahmenelement
- 5: Gestrick
- 8: Armlehne
- 9: Kopfstütze
- 10: Fahrzeugsitzfuß
- 11: oberer Bereich des Rahmenelements
- 12: unterer Bereich des Rahmenelements
- 13: Innenfläche
- 14a: Oberseite des oberen Bereichs
- 14b: Querstrebe des oberen Bereichs bzw. Befestigungselement
- 14c: Innenseite der Querstrebe des oberen Bereichs
- 15: erste Seitenstrebe des unteren Bereichs
- 15a: Innenseite der ersten Seitenstrebe
- 15b: Außenseite der ersten Seitenstrebe
- 15c: Vorderseite der ersten Seitenstrebe
- 15d: Rückseite der ersten Seitenstrebe
- 16: zweite Seitenstrebe des unteren Bereichs
- 16a: Innenseite der zweiten Seitenstrebe
- 16b: Außenseite der zweiten Seitenstrebe
- 16c: Vorderseite der zweiten Seitenstrebe
- 16d: Rückseite der zweiten Seitenstrebe
- 17: Querstrebe des unteren Bereichs
- 17a: Innenseite der Querstrebe
- 17b: Außenseite der Querstrebe
- 17c: Vorderseite der Querstrebe
- 17d: Rückseite der Querstrebe
- 18: Stützstrebe
- 19: Schaumstoffeinlage
- 20: oberer Abschnitt des Gestricks
- 20a: erste Öffnungsseite
- 20b: zweite Öffnungsseite
- 21: unterer Abschnitt des Gestricks
- 22: obere Befestigungseinheit
- 22a: Befestigungselement
- 23: erste seitliche Befestigungseinheit
- 23a: Befestigungselement
- 24: zweite seitliche Befestigungseinheit
- 24a: Befestigungselement
- 25: dritte seitliche Befestigungseinheit
- 25a: Befestigungselement
- 26: vierte seitliche Befestigungseinheit
- 26a: Befestigungselement
- 27: untere Befestigungseinheit
- 27a: Befestigungselement
- 28: Verschlusselement
- 29: Kopfstützenausnehmung
- 30a, b: Sitzfußverbindungselement
- 31a, b: Sitzteilverbindungselement
- 32: Polsterstützelement
- 33: Aussparung
- 34: Öffnung
- 35a, b: Montageleisten
- 36: oberer Randbereich des Gestricks
- 37: erster seitlicher Randbereich des Gestricks
- 38: zweiter seitlicher Randbereich des Gestricks
- 39: unterer Randbereich des Gestricks
- 40a, b: Verbindungsachse
- 41: Befestigungselement an der Innenseite der ersten Seitenstrebe
- 42: Befestigungselement an der Innenseite der zweiten Seitenstrebe
- 43: Befestigungselement an der Innenseite der Querstrebe
- 44: Kopfstützenbefestigung
- 45: Taschenelement
- 46: unteres Segment des Polsterstützelements
- 47: mittleres Segment des Polsterstützelements
- 48: oberes Segment des Polsterstützelements
- 49: vorderseitig konvexer Bereich
- 50: rückseitig konvexer Bereich
- 60: erstes Strickmuster
- 61: zweites Strickmuster
- 62: drittes Strickmuster
- D: Dicke des Polsterstützelements
- H: Höhe des Polsterstützelements
- B: Breite des Polsterstützelements
- V: Vorderseite des Polsterstützelements
- R: Rückseite des Polsterstützelements
- a.-d.: Schritte
- S1, S2, S3: Schnittachse

## Patentansprüche

1. Fahrzeugsitz (1) mit einem Sitzteil (2) und einem Rückenlehnenteil (3), bei welchem das Rückenlehnenteil (3) ein Rahmenelement (4), dass eine Innenfläche (13) einschließt, und ein an dem Rahmenelement (4) angeordnetes Gestrick (5) aufweist,
wobei das Rahmenelement (4) zumindest an zwei gegenüberliegenden Innenseiten jeweils mindestens ein Befestigungselement aufweist und das Gestrick (5) jeweils ein komplementär dazu ausgebildetes und rückseitig angeordnetes Befestigungselement aufweist, wobei das Gestrick (5) durch die Befestigungselemente derart an dem Rahmenelement (4) befestigt ist, dass das Gestrick (5) das Rahmenelement (4) ausgehend von einer dem Sitzteil (2) zugewandten Vorderseite des Rahmenelements (4) zumindest teilweise von außen nach innen umgreift und im Wesentlichen vollständig gespannt ist,
**dadurch gekennzeichnet, dass** das Gestrick (5) einen oberen schlauchartigen Abschnitt mit zwei Öffnungsseiten aufweist,
wobei eine erste Öffnungsseite geschlossen ist, wobei der obere schlauchartige Abschnitt des Gestricks den oberen Bereich des Rahmenelements (11) umschließend angeordnet ist.

2. Fahrzeugsitz (1) nach Anspruch 1,
**dadurch gekennzeichnet, dass**
das Gestrick (5) zumindest im Bereich der Innenfläche (13) freischwingend auf der Vorderseite des Rahmenelements (4) angeordnet ist, wobei das Gestrick (5) im Bereich der Innenfläche (13) auf oder über der Innenfläche (13)oder abschnittsweise auf oder über und innerhalb der Innenfläche (13) angeordnet ist, wobei das Gestrick (5) zumindest in dem Bereich der Innenfläche (13) die einzige Stützung und/oder Polsterung für einen Sitzbenutzer bereitstellt.

3. Fahrzeugsitz (1) nach Anspruch 1 oder 2,
**dadurch gekennzeichnet, dass**
das Rahmenelement (4) einen durchgehenden oberen Bereich zur Abstützung des Kopfes und einen die Innenfläche (13) aufweisenden unteren Bereich zur Abstützung des Rückens umfasst, wobei eine Innenseite des oberen Bereichs die Innenfläche (13) von oben und drei Innenseiten des unteren Bereichs die Innenfläche (13) seitlich und von unten begrenzen, wobei das Rahmenelement (4) an allen die Innenfläche (13) begrenzenden Innenseiten jeweils mindestens ein Befestigungselement aufweist, wobei die Befestigungselemente am Rahmenelement (4) und dem Gestrick (5) derart ausgebildet sind, dass die Befestigung des Gestricks am Rahmenelement (4) zerstörungsfrei lösbar ist.

4. Fahrzeugsitz (1) nach einem der vorhergehenden Ansprüche,
**dadurch gekennzeichnet, dass**
die Befestigungselemente am Rahmenelement (4) als Haken, Leisten, Klettverschlüsse, Reisverschlüsse oder Druckknöpfe ausgebildet sind, wobei mehrere verschiedene Arten von Befestigungselementen oder nur eine Art von Befestigungselement vorgesehen sind, wobei an den Innenseiten des Rahmenelements (4) jeweils mehrere Befestigungselemente oder ein durchgängiges Befestigungselement über die Länge der Innenseite verteilt angeordnet sind.

5. Fahrzeugsitz (1) nach einem der vorhergehenden Ansprüche,
**dadurch gekennzeichnet, dass**
wobei das Gestrick (5) einen im Wesentlichen flächigen und direkt vorne an den oberen Abschnitt anschließenden unteren Abschnitt aufweist, wobei der untere Abschnitt den unteren Bereich des Rahmenelements (4) von vorne kontaktiert und ausgehend von der Vorderseite des Rahmenelements (4) zumindest teilweise von außen nach innen umgreift.

6. Fahrzeugsitz (1) nach Anspruch 5,
**dadurch gekennzeichnet, dass**
die komplementären Befestigungselemente des Gestricks am oberen Abschnitt hinten randseitig an der offenen zweiten Öffnungsseite und am unteren Abschnitt randseitig seitlich und unten angeordnet sind.

7. Fahrzeugsitz (1) nach einem der vorhergehenden Ansprüche,
**dadurch gekennzeichnet, dass**
an dem Gestrick (5) mindestens zwei, insbesondere mindestens vier, Befestigungseinheiten fest angeordnet sind, wobei die Befestigungseinheiten die am Gestrick (5) angeordneten Befestigungselemente aufweisen und jede Befestigungseinheit mindestens ein Befestigungselement umfasst, wobei die Befestigungseinheiten an dem Gestrick (5) randseitig, insbesondere gegenüberliegend, befestigt, insbesondere angenäht, und leistenartig ausgebildet sind, wobei die an den Befestigungseinheiten angeordneten Befestigungselemente über eine Grundfläche des Gestricks (5) hinausragen.

8. Inneneinrichtung eines Transportmittels, insbesondere ein Personentransportmittel, umfassend zumindest einen Fahrzeugsitz (1) nach einem der vorhergehenden Ansprüche.

9. Verfahren zur Herstellung eines Rückenlehnenteils (3) für einen Fahrzeugsitz (1) nach einem der Ansprüche 1 bis 8, umfassend zumindest die folgenden Schritte:
a. Bereitstellen eines Rahmenelements (4) und eines Gestricks (5), wobei das Rahmenelement (4) zumindest an zwei gegenüberliegenden Innenseiten jeweils mindestens ein Befestigungselement aufweist und das Gestrick (5) jeweils ein komplementär dazu ausgebildetes und rückseitig angeordnetes Befestigungselement aufweist;
b. Anlegen des Gestricks (5) an das Rahmenelement (4) an einer dem Sitzteil (2) zugewandten Vorderseite des Rahmenelements (4);
c. Befestigen des Gestricks (5) an dem Rahmenelement (4) durch die Befestigungselemente, sodass das Gestrick (5) das Rahmenelement (4) zumindest teilweise von außen nach innen umgreift;
d. Erhalten des Rückenlehnenteils (3) mit dem das Rahmenelement (4) zumindest teilweise umspannenden Gestrick (5), wobei das Gestrick (5) einen oberen schlauchartigen Abschnitt mit zwei Öffnungsseiten aufweist, wobei eine erste Öffnungsseite geschlossen ist, wobei der obere schlauchartige Abschnitt des Gestricks den oberen Bereich des Rahmenelements (11) umschließend angeordnet ist.

## Claims

1. Vehicle seat (1) comprising a seat part (2) and a backrest part (3), wherein the backrest part (3) comprises a frame element (4) enclosing an inner surface (13) and a knitted fabric (5) arranged on the frame element (4),
wherein the frame element (4) comprises at least one fastening element on each of at least two opposite inner sides and the knitted fabric (5) comprises a complementary fastening element formed correspondingly thereto and arranged on a rear side,
wherein the knitted fabric (5) is fastened to the frame element (4) by the fastening elements such that, starting from a front side of the frame element (4) facing the seat part (2), the knitted fabric (5) at least partially surrounds the frame element (4) from outside to inside and is substantially fully tensioned,
**characterized in that** the knitted fabric (5) comprises an upper tubular section having two opening sides, wherein a first opening side is closed, and wherein the upper tubular section of the knitted fabric is arranged so as to enclose an upper section of the frame element (11).

2. Vehicle seat (1) according to claim 1,
**characterized in that** the knitted fabric (5) is arranged freely suspended on the front side of the frame element (4) at least in the region of the inner surface (13), wherein the knitted fabric (5) is arranged in the region of the inner surface (13) on or above the inner surface (13) or partially on or above and within the inner surface (13),
wherein the knitted fabric (5) constitutes, at least in the region of the inner surface (13), the sole support and/or cushioning for a seat user.

3. Vehicle seat (1) according to claim 1 or 2,
**characterized in that** the frame element (4) comprises a continuous upper section for supporting the head and a lower section comprising the inner surface (13) for supporting the back, wherein one inner side of the upper section delimits the inner surface (13) from above and three inner sides of the lower section delimit the inner surface (13) laterally and from below, wherein the frame element (4) comprises at least one fastening element on each inner side delimiting the inner surface (13), and
wherein the fastening elements on the frame element (4) and on the knitted fabric (5) are configured such that the knitted fabric (5) is releasably fastened to the frame element (4) without damage.

4. Vehicle seat (1) according to any of the preceding claims,
**characterized in that** the fastening elements on the frame element (4) are formed as hooks, strips, hook-and-loop fasteners, zippers or press studs, wherein either several different types of fastening elements or only one type of fastening element is provided, and wherein several fastening elements or one continuous fastening element extending over the length of the inner side are arranged on the inner sides of the frame element (4).

5. Vehicle seat (1) according to any of the preceding claims,
**characterized in that** the knitted fabric (5) comprises a substantially flat lower section directly adjoining the upper section at the front, wherein the lower section contacts the lower section of the frame element (4) from the front and, starting from the front side of the frame element (4), at least partially surrounds the lower section of the frame element (4) from outside to inside.

6. Vehicle seat (1) according to claim 5,
**characterized in that** the complementary fastening elements of the knitted fabric are arranged on the upper section at the rear edge on the open second opening side, and on the lower section at the lateral and lower edges.

7. Vehicle seat (1) according to any of the preceding claims,
**characterized in that** at least two fastening units, in particular at least four fastening units, are firmly arranged on the knitted fabric (5), wherein the fastening units comprise the fastening elements arranged on the knitted fabric (5) and each fastening unit comprises at least one fastening element, and wherein the fastening units are arranged on the knitted fabric (5) at the edges, in particular opposite each other, are fastened, in particular sewn, and formed as strips, wherein the fastening elements arranged on the fastening units project beyond a base surface of the knitted fabric (5).

8. Interior of a transport vehicle, in particular a passenger transport vehicle,
comprising at least one vehicle seat (1) according to any of the preceding claims.

9. Method for manufacturing a backrest part (3) for a vehicle seat (1) according to any of claims 1 to 8, comprising at least the following steps:
a. providing a frame element (4) and a knitted fabric (5), wherein the frame element (4) comprises at least one fastening element on each of at least two opposite inner sides, and wherein the knitted fabric (5) comprises a complementary fastening element formed correspondingly thereto and arranged on a rear side;
b. placing the knitted fabric (5) on the frame element (4) on a front side of the frame element (4) facing the seat part (2);
c. fastening the knitted fabric (5) to the frame element (4) by the fastening elements, such that the knitted fabric (5) at least partially surrounds the frame element (4) from outside to inside;
d. obtaining the backrest part (3) with the knitted fabric (5) at least partially surrounding the frame element (4), wherein the knitted fabric (5) comprises an upper tubular section with two opening sides, wherein a first opening side is closed, and
wherein the upper tubular section of the knitted fabric is arranged so as to enclose an upper section of the frame element (11).

## Revendications

1. Siège de véhicule (1) ayant une partie assise (2) et une partie dossier (3), dans lequel la partie dossier (3) présente un élément cadre (4) qui inclut une surface interne (13) et un tissu tricoté (5) disposé sur l'élément cadre (4),
l'élément cadre (4) présentant au moins sur deux côtés internes opposés à chaque fois au moins un élément de fixation et le tissu tricoté (5) présentant à chaque fois un élément de fixation formé de façon complémentaire à celui-ci et disposé sur le côté arrière, le tissu tricoté (5) étant fixé à l'élément de cadre (4) par les éléments de fixation de telle sorte que le tissu tricoté (5) entoure au moins partiellement l'élément cadre (4) de l'extérieur vers l'intérieur à partir d'un côté avant de l'élément cadre (4) tourné vers la partie assise (2) et est sensiblement complètement tendu,
**caractérisé par le fait que**
le tissu tricoté (5) présente section tubulaire supérieure avec deux côtés d'ouverture, un premier côté d'ouverture étant fermé, la section tubulaire supérieure du tissu tricoté étant disposée de manière à entourer la zone supérieure de l'élément cadre (11).

2. Siège de véhicule (1) selon la revendication 1,
**caractérisé par le fait que**
le tissu tricoté (5) est disposé au moins dans la zone de la surface interne (13) de façon à osciller librement sur le côté avant de l'élément cadre (4), le tissu tricoté (5) étant disposé dans la zone de la surface interne (13) sur ou au-dessus de la surface interne (13) ou par sections sur ou au-dessus et à l'intérieur de la surface interne (13), le tissu tricoté (5) fournissant au moins dans la zone de la surface interne (13) le seul support et/ou rembourrage pour un utilisateur du siège.

3. Siège de véhicule (1) selon la revendication 1 ou 2,
**caractérisé par le fait que**
l'élément cadre (4) comporte une zone supérieure continue pour soutenir la tête et une zone inférieure présentant la surface interne (13) pour soutenir le dos, un côté interne de la zone supérieure délimitant la surface interne (13) par le haut et trois faces internes de la zone inférieure délimitant la surface interne (13) latéralement et par le bas, l'élément cadre (4) présentant sur tous les côtés internes délimitant la surface interne (13) à chaque fois au moins un élément de fixation, les éléments de fixation sur l'élément cadre (4) et le tissu tricoté (5) étant conçus de telle sorte que la fixation du tissu tricoté sur l'élément cadre (4) soit détachable de manière non destructive.

4. Siège de véhicule (1) selon l'une des revendications précédentes,
**caractérisé par le fait que**
les éléments de fixation sur l'élément cadre (4) sont conçus sous forme de crochets, de bandes, de fermetures auto-agrippantes, de fermetures à glissière ou de boutons-pression, plusieurs types différents d'éléments de fixation ou un seul type d'élément de fixation étant prévus, à chaque fois plusieurs éléments de fixation ou un élément de fixation continu étant disposés sur les côtés internes de l'élément cadre (4), répartis sur la longueur du côté interne.

5. Siège de véhicule (1) selon l'une des revendications précédentes,
**caractérisé par le fait que**
le tissu tricoté (5) présente une section inférieure sensiblement plane et se raccordant directement à la section supérieure à l'avant, la section inférieure entrant en contact avec la zone inférieure de l'élément cadre (4) à partir l'avant et, à partir du côté avant de l'élément cadre (4), l'enveloppant au moins partiellement de l'extérieur vers l'intérieur.

6. Siège de véhicule (1) selon la revendication 5,
**caractérisé par le fait que**
les éléments de fixation complémentaires du tissu tricoté sont disposés à la section supérieure à l'arrière du côté du bord du second côté d'ouverture ouvert et à la section inférieure du côté du bord latéralement et au-dessous.

7. Siège de véhicule (1) selon l'une des revendications précédentes,
**caractérisé par le fait que**
sur le tissu tricoté (5), au moins deux, en particulier au moins quatre, unités de fixation sont disposées de manière fixe, les unités de fixation présentant les éléments de fixation disposés sur le tissu tricoté (5) et chaque unité de fixation comportant au moins un élément de fixation, les unités de fixation étant fixées, en particulier cousues, sur le tissu tricoté (5), du côté du bord, en particulier à l'opposé l'une de l'autre, et étant de conception en forme de bande, les éléments de fixation disposés sur les unités de fixation faisant saillie au-delà d'une surface de base du tissu tricoté (5).

8. Aménagement intérieur d'un moyen de transport, en particulier d'un moyen de transport de personnes, comportant au moins un siège de véhicule (1) selon l'une des revendications précédentes.

9. Procédé de fabrication d'une partie dossier (3) pour un siège de véhicule (1) selon l'une des revendications 1 à 8, comportant au moins les étapes suivantes :
a) mise à disposition d'un élément cadre (4) et d'un tissu tricoté (5), l'élément cadre (4) présentant au moins sur deux côtés internes opposés à chaque fois au moins un élément de fixation et le tissu tricoté (5) présentant à chaque fois un élément de fixation réalisé de façon complémentaire à celui-ci et disposé sur le côté arrière ;
b) mise en place du tissu tricoté (5) contre l'élément cadre (4) sur un côté avant de l'élément cadre (4) tourné vers la partie siège (2) ;
c) fixation du tissu tricoté (5) à l'élément cadre (4) à l'aide des éléments de fixation, de telle sorte que le tissu tricoté (5) entoure au moins partiellement l'élément cadre (4) de l'extérieur vers l'intérieur ;
d) obtention de la partie dossier (3) avec le tissu tricoté (5) enveloppant au moins partiellement l'élément cadre (4), le tissu tricoté (5) présentant une section tubulaire supérieure avec deux côtés d'ouverture, un premier côté d'ouverture étant fermé, la partie tubulaire supérieure du tissu tricoté étant disposée de manière à entourer la zone supérieure de l'élément cadre (11).
